# EUROPEAN PATENT SPECIFICATION

(11) **EP 4 517 455 B1**
(45) Date of publication and mention of the grant of the patent: **23.09.2026**
(21) Application number: 23796209.7
(22) Date of filing: 19.04.2023
(51) Int. Cl.: G05B 19/404, A61C 13/38, G05B 19/401, A61C 13/00, A61C 13/12, B23Q 15/22, B23Q 17/20

(54) **CORRECTION METHOD FOR DENTAL CUTTING MACHINE, AND DENTAL CUTTING MACHINE**
KORREKTURVERFAHREN FÜR EINE ZAHNÄRZTLICHE SCHNEIDEMASCHINE UND ZAHNÄRZTLICHE SCHNEIDEMASCHINE
PROCÉDÉ DE CORRECTION POUR UNE MACHINE DE COUPE DENTAIRE ET MACHINE DE COUPE DENTAIRE

(30) Priority: 28.04.2022 JP 2022075072
(43) Date of publication of application: 05.03.2025
(73) Proprietor: DGSHAPE Corporation, Hamamatsu-shi, Shizuoka 431-2103 (JP)
(72) Inventor: UEDA Jun, Hamamatsu-shi, Shizuoka 431-2103 (JP); DODO Shinpei, Hamamatsu-shi, Shizuoka 431-2103 (JP); SATO Ryo, Hamamatsu-shi, Shizuoka 431-2103 (JP); MOCHIZUKI Ryusuke, Hamamatsu-shi, Shizuoka 431-2103 (JP); NIUISHI Keiichi, Hamamatsu-shi, Shizuoka 431-2103 (JP); NITTA Kenji, Hamamatsu-shi, Shizuoka 431-2103 (JP)
(74) Representative: Grünecker Patent- und Rechtsanwälte PartG mbB
(86) International application number: PCT/JP2023/015668
(87) International publication number: WO 2023/210467

(56) References cited:
- JP-A- 2021 170 230
- US-A1- 2015 320 524
- US-A1- 2019 121 326
- US-A1- 2021 323 108

## Description

### TECHNICAL FIELD

The present invention relates to a correction method for a dental cutting machine and a dental cutting machine.

### BACKGROUND ART

Dental cutting machines that produce dental products by machined objects are known to date. Patent Document 1, for example, discloses a dental cutting machine including a main shaft that holds and rotates a cutting tool, a holding member that holds a machined object, a rotary mechanism that rotates the holding member to change orientation of the holding member, an X1-direction movement mechanism that moves the holding member and the rotary mechanism in a front-rear direction, and a Y-direction movement mechanism and a Z1-direction movement mechanism that move the main shaft in a left-right direction and a top-bottom direction, respectively. US 2021/323108 A1 discloses a cutting apparatus including a container including a holder in which a workpiece having an adapter attached thereto is held. A reading target is applied to the adapter, a position coordinate of the holder stored in the memory is updated based on imaging the reading target. US 2019/121326 A1 relates to a method for operating at least one machining apparatus for machining workpieces, in particular panel-shaped workpieces. Furthermore, patent publication US2015320524A1 relates to computer numerical control (CNC) machine calibration, and more specifically to CNC machine calibration for the fabrication of dental implant abutments.

### CITATION LIST

### Patent Document

Patent Document 1: JP2021-178372A,
Patent document 2: US2021323108A1, Patent document 3: US2019121326A1,
Patent document 4: US2015320524A1.

### SUMMARY OF INVENTION

### Technical Problems

In a dental cutting machine, operational errors can occur because of aging or other reasons, resulting in manufacturing of products deviating from dimensions specified in a machining program.

This application provides a method for correcting errors in a dental cutting machine encountering operational errors. This application also provides a dental cutting machine with a configuration advantageous for executing the provided method.

### Solution to Problem

A correction method for a dental cutting machine disclosed here includes: a program step of inputting a machining program of a correction piece to a dental cutting machine; a mounting step of mounting a material for the correction piece to the dental cutting machine to which the machining program has been input; a machining step of machining the correction piece from the material by the dental cutting machine based on the machining program; a measurement step of measuring a dimension of a predetermined portion of the correction piece machined in the machining step; a calculation step of calculating a correction value based on the dimension measured in the measurement step; and an input step of inputting the correction value calculated in the calculation step to the dental cutting machine, wherein the dental cutting machine includes a tool holder that holds a cutting tool, a workpiece holder that holds the correction piece, and a mover that moves at least one of the tool holder and the workpiece holder to thereby move the cutting tool in a predetermined moving direction relative to the workpiece holder, the machining program forms a first plane whose coordinate in the moving direction is a first coordinate and a second plane whose coordinate in the moving direction is a second coordinate by the cutting tool on the correction piece, in the measurement step, a distance between the first plane and the second plane in the moving direction is measured, the correction value includes a correction value concerning the distance in the moving direction, and the correction value concerning the distance in the moving direction is a correction value for adjusting a difference in coordinate value between the first coordinate and the second coordinate to the distance measured in the measurement step.

With this method, the correction piece is produced and dimensions of a predetermined portion of the correction piece are measured so that it is possible to perform correction to the dental cutting machine based on actual dimensions of the correction piece. Accordingly, operational errors of the dental cutting machine can be corrected.

A dental cutting machine disclosed here includes: a tool holder that holds a cutting tool; a workpiece holder that holds a machined object; a mover that moves at least one of the tool holder and the workpiece holder to thereby move the cutting tool relative to the workpiece holder; and a controller that controls the mover. The controller includes a program register in which a machining program of a correction piece for correcting a position of the mover is registered, a machining controller that controls the mover based on the machining program and machines the correction piece, an input section to which a measurement result of a dimension of a predetermined portion of the correction piece is input, a calculator that calculates a correction value to be set in the mover based on the result input to the input section, and a corrector that sets the correction value calculated in the calculator in the mover.

In this dental cutting machine, the program register in which the machining program of the correction piece is previously registered, the calculator that calculates the correction value when a measurement result of dimensions of the correction piece is input, and the corrector that sets the calculated correction value to the mover make it possible to perform correction of the dental cutting machine easily.

### BRIEF DESCRIPTION OF THE DRAWINGS

[FIG. 1] FIG. 1 is a perspective view of a cutting machine according to one embodiment.
[FIG. 2] FIG. 2 is a plan view of a machined object and an adaptor.
[FIG. 3] FIG. 3 is a longitudinal cross-sectional view of the cutting machine when seen from the left.
[FIG. 4] FIG. 4 is a plan view of a workpiece holder and a rotator.
[FIG. 5] FIG. 5 is a block diagram of the cutting machine.
[FIG. 6] FIG. 6 is a flowchart of a first stage.
[FIG. 7] FIG. 7 is a plan view of a first correction piece.
[FIG. 8] FIG. 8 is a cross-sectional view of the first correction piece.
[FIG. 9] FIG. 9 is a schematic view illustrating a thickness of an uncut portion in a case where a rotation angle that is 180 degrees in a machining program is actually (180-θ1) degrees.
[FIG. 10] FIG. 10 is a flowchart of a second stage.
[FIG. 11] FIG. 11 is a plan view of a second correction piece.
[FIG. 12] FIG. 12 is a perspective view of a measurement piece when seen from the front.
[FIG. 13] FIG. 13 is a perspective view of the measurement piece when seen from the rear.
[FIG. 14] FIG. 14 is a schematic view illustrating a case where a position of a cutter in Z-axis directions relative to a rotation shaft is shifted.
[FIG. 15] FIG. 15 is a schematic view illustrating a case where a position of the cutter in Y-axis directions relative to the rotation shaft is shifted.

### DESCRIPTION OF EMBODIMENTS

A dental cutting machine according to one embodiment will be described with reference to the drawings. The embodiments described herein are, of course, not intended to limit the present invention. Elements and features having the same functions are denoted by the same reference characters, and description for the same elements and features will not be repeated or will be simplified as appropriate.

### [Configuration of Cutting Machine]

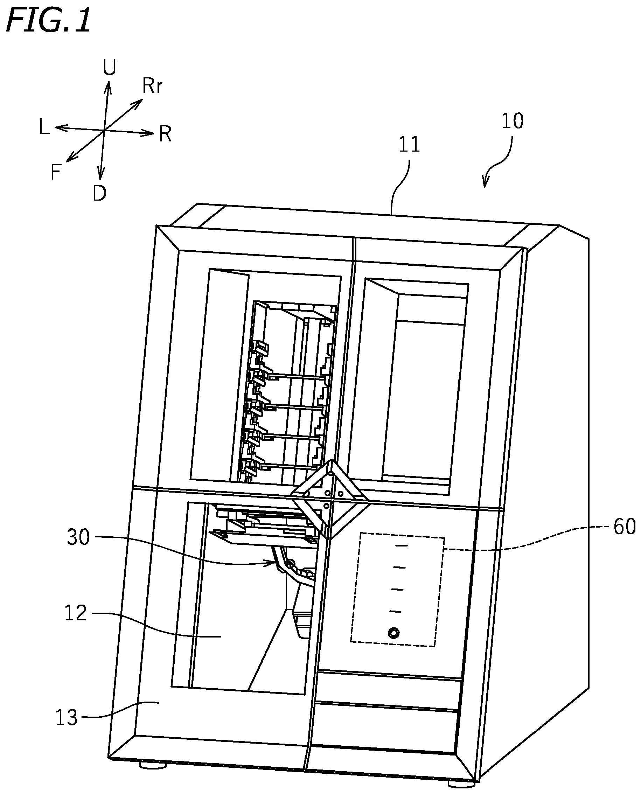

FIG. 1 is a perspective view of a dental cutting machine 10 (hereinafter referred to simply as a "cutting machine 10") according to one embodiment. In the following description, when the cutting machine 10 is seen from the front, a direction away from the cutting machine 10 will be referred to as forward, and a direction toward the cutting machine 10 will be referred to as rearward. Left, right, up, and down respectively refer to left, right, up, and down when the cutting machine 10 is seen from the front. Characters F, Rr, L, R, U, and D in the drawings represent front, rear, left, right, up, and down, respectively.

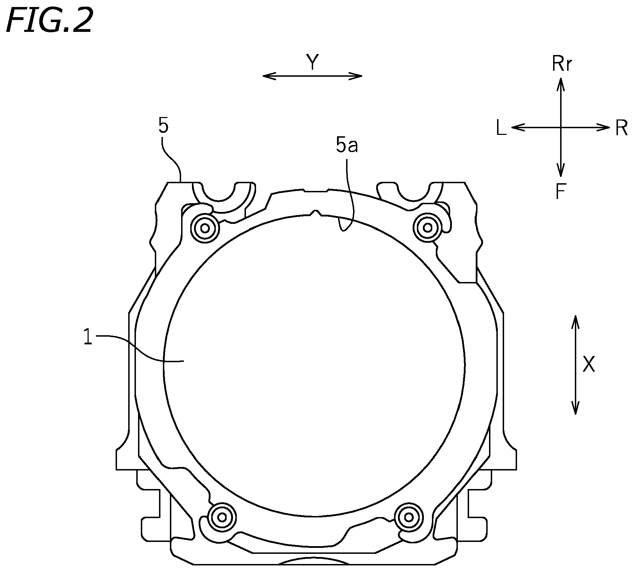

The cutting machine 10 according to this embodiment is a cutting machine that performs machining on a disc-shaped machined object held by an adaptor. FIG. 2 is a plan view of a machined object 1 and an adaptor 5. The cutting machine 10 herein is a device that produces dental products such as crown prosthetics such as crowns, bridges, copings, inlays, onlays, veneers, and custom abutments, artificial teeth, denture bases, and other products, by cutting the machined object 1. The cutting machine 10 according to this embodiment is a dry-type cutting machine using no coolant.

Examples of constituents of the machined object 1 include resins such as PMMA, PEEK, glass fiber reinforced resin, and hybrid resin, ceramic materials such as glass ceramic and zirconia, metal materials such as cobalt-chromium sintered metal, wax, and gypsum. In the case of using zirconia as a material for the machined object 1, semi-sintered zirconia is used, for example. The machined object 1 herein has a disc (disk) shape. The machined object 1 may have another shape such as a block shape (e.g., cube or rectangular solid) .

The adaptor 5 holds the disc-shaped machined object 1. The adaptor 5 herein is a flat-plate adaptor in which a substantially circular insertion hole 5a corresponding to the machined object 1 is formed at the center. The machined object 1 is inserted in the insertion hole 5a to be thereby held by the adaptor 5. The machined object 1 is housed in the cutting machine 10 and machined while being held by the adaptor 5.

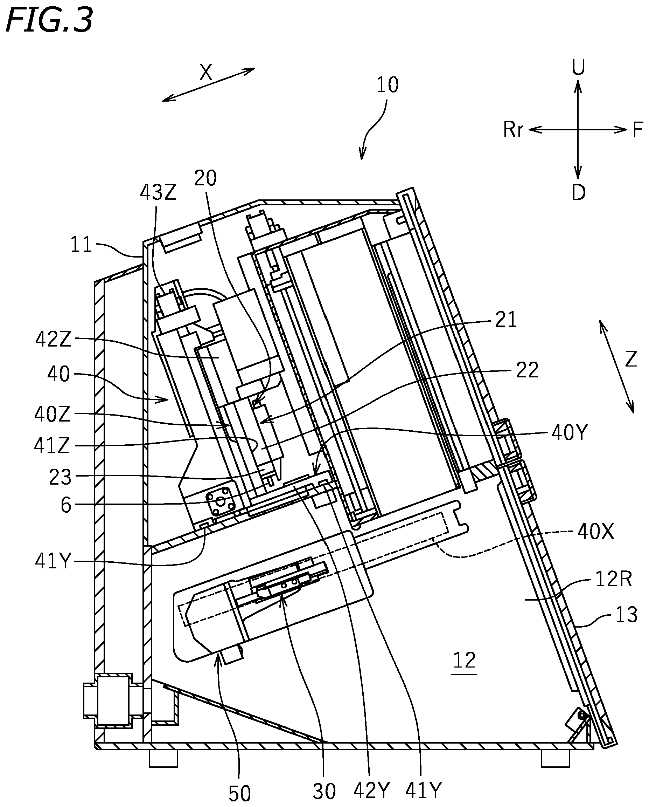

As illustrated in FIG. 1, the cutting machine 10 includes a box-shaped casing 11. FIG. 3 is a longitudinal cross-sectional view of the cutting machine 10 when seen from the left. As illustrated in FIG. 3, the cutting machine 10 includes a cutter 20 that holds a rod-shaped cutting tool 6 and rotates the cutting tool 6 about an axis, a workpiece holder 30 that holds a machined object 1 (see FIG. 2), a mover 40 that moves the cutter 20 and the workpiece holder 30 to thereby move the cutting tool 6 relative to the workpiece holder 30, and a controller 60 (see FIG. 1). The mover 40 includes a rotator 50 that changes orientation of the workpiece holder 30 relative to the cutting tool 6 in addition to a device that translates the cutter 20 relative to the workpiece holder 30. The cutter 20, the workpiece holder 30, the mover 40 including the rotator 50, and the controller 60 are housed in the casing 11.

As illustrated in FIG. 3, the cutter 20 includes the cutting tool 6 such that the axis thereof extends in predetermined Z-axis directions. The cutter 20 is an example of a tool holder that holds the cutting tool 6. The Z-axis directions herein are oblique top-bottom directions that tilt rearward. The workpiece holder 30 is located below the cutter 20. The workpiece holder 30 is located in a machining chamber 12 in which machining is performed on the machined object 1. As illustrated in FIG. 1, a machining chamber door 13 is attached to a front opening portion of the machining chamber 12 to be freely opened and closed. The mover 40 includes a Z-axis direction mover 40Z that moves the cutter 20 in the Z-axis directions. The mover 40 further includes a Y-axis direction mover 40Y that moves the cutter 20 in Y-axis directions and an X-axis direction mover 40X that moves the workpiece holder 30 and the rotator 50 in X-axis directions. The X-axis directions are orthogonal to the Z-axis directions, and are herein oblique front-rear directions that tilt downward toward the rear. The Y-axis directions are orthogonal to the Z-axis directions and the X-axis directions, and are herein the left-right directions.

As illustrated in FIG. 3, the cutter 20 includes a main shaft 21 that grips and rotates the cutting tool 6. The main shaft 21 includes a spindle unit 22 and a gripper 23 located at a lower end portion of the spindle unit 22. The spindle unit 22 extends in the Z-axis directions. The spindle unit 22 rotates the gripper 23 about an axis parallel to the Z-axis directions. The spindle unit 22 is a unit incorporating a motor herein. The spindle unit 22 may be connected to, for example, an external motor by a belt or the like. The gripper 23 is, for example, an air-driven collet chuck. The type of the gripper 23 is not particularly limited.

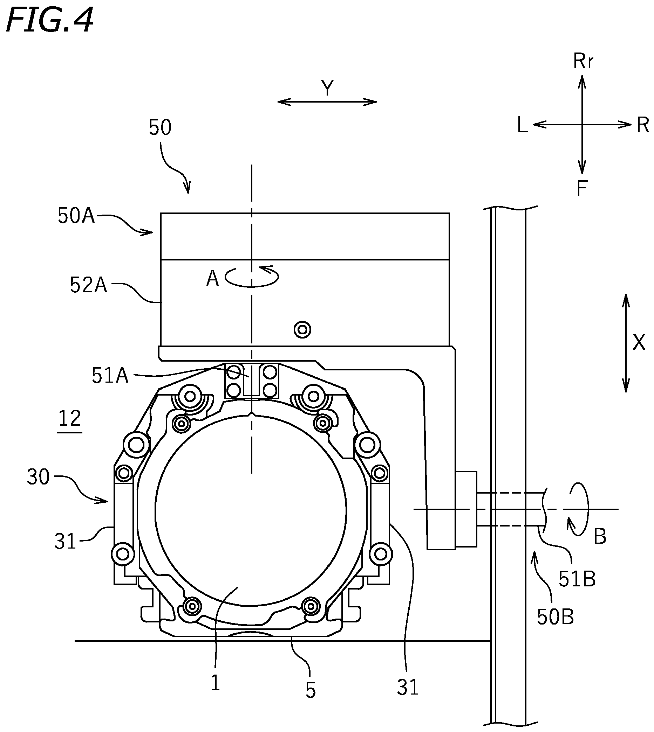

FIG. 4 is a plan view of the workpiece holder 30 and the rotator 50. As illustrated in FIG. 4, the workpiece holder 30 includes a pair of left and rightward arms 31. The adaptor 5 is inserted between the pair of arms 31 to be thereby held by the workpiece holder 30. The workpiece holder 30 herein holds the machined object 1 through the adaptor 5. The workpiece holder 30 may directly hold the machined object 1 without intervention of other members.

The rotator 50 includes a rotator 50A that rotates the workpiece holder 30 about a rotation shaft 51A extending in the X-axis directions, and a rotator 50B that rotates the workpiece holder 30 about a rotation shaft 51B extending in the Y-axis directions. In the following description, regarding rotation of the workpiece holder 30, directions along which the rotation shaft 51A extends will be also referred to as A-axis directions, and rotation about the rotation shaft 51A will be also referred to as rotation about an A axis. The A-axis directions are parallel to the X-axis directions. The rotator 50A will be also referred to as an A-axis rotator 50A. The A-axis rotator 50A includes an A-axis rotation motor 52A that rotates the rotation shaft 51A.

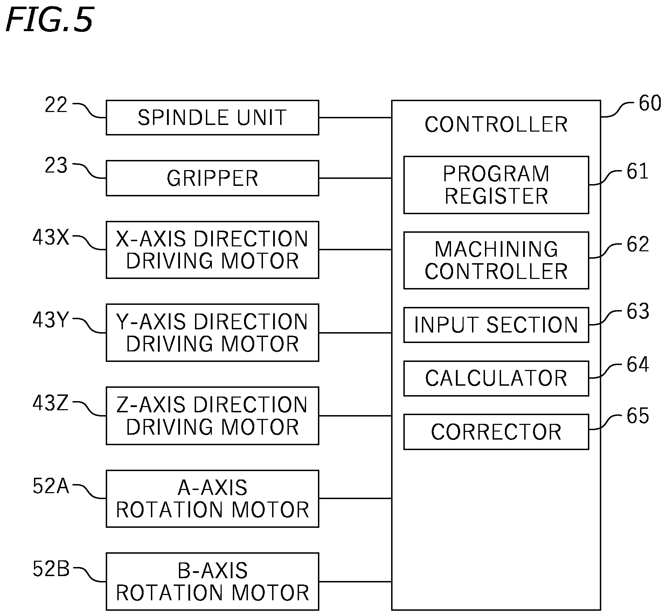

Similarly, in the following description, regarding rotation of the workpiece holder 30, directions along which the rotation shaft 51B extends will be also referred to as B-axis directions, and rotation about the rotation shaft 51B will be also referred to rotation about the B axis. The B-axis directions are parallel to the Y-axis directions. The rotator 50B will be also referred to as a B-axis rotator 50B. The B-axis rotator 50B includes a B-axis rotation motor 52B (see FIG. 5) that rotates the rotation shaft 51B. As illustrated in FIG. 4, the B-axis rotator 50B supports the A-axis rotator 50A, and rotates the A-axis rotator 50A about the B axis. The A-axis rotator 50A supports the workpiece holder 30, and rotates the workpiece holder 30 about the A axis. The rotation range of the A-axis rotator 50A is a full circumference (360 degrees), whereas the rotation range of the B-axis rotator 50B is smaller than 360 degrees. The angles of the rotation shaft 51A and the rotation shaft 51B at which one surface of the machined object 1 extends in the X-axis directions and the Y-axis directions (orthogonal to the Z-axis directions) in a machining program will be hereinafter referred to as 0 degrees. However, this designation is merely defined for convenience.

As illustrated in FIG. 3, the Y-axis direction mover 40Y includes a pair of Y-axis guide rails 41Y extending in the Y-axis directions, a Y-axis direction moving body 42Y slidably engaged with the Y-axis guide rails 41Y, a Y-axis direction driving motor 43Y (see FIG. 5), and an unillustrated ball screw. The Y-axis direction moving body 42Y is movable in the Y-axis directions along the Y-axis guide rails 41Y. The Y-axis direction moving body 42Y supports the Z-axis direction mover 40Z. The Z-axis direction mover 40Z supports the cutter 20 such that the cutter 20 is movable in the Z-axis directions. When the Y-axis direction driving motor 43Y is driven, the ball screw rotates, and the Y-axis direction moving body 42Y, the Z-axis direction mover 40Z, and the cutter 20 move in the Y-axis directions along the Y-axis guide rails 41Y. The Z-axis direction mover 40Z also has a configuration similar to that of the Y-axis direction mover 40Y. The Z-axis direction mover 40Z includes Z-axis guide rails 41Z extending in the Z-axis directions, a Z-axis direction moving body 42Z slidably engaged with the Z-axis guide rails 41Z, a Z-axis direction driving motor 43Z, and an unillustrated ball screw. When the Z-axis direction driving motor 43Z is driven, the ball screw rotates, and the Z-axis direction moving body 42Z and the cutter 20 move in the Z-axis directions.

Although not shown in detail, the X-axis direction mover 40X is located at the right of a right wall 12R of the machining chamber 12. In a manner similar to the Y-axis direction mover 40Y and the Z-axis direction mover 40Z, the X-axis direction mover 40X also includes guide rails extending in the X-axis directions, an X-axis direction moving body slidably engaged with the guide rails, an X-axis direction driving motor 43X (see FIG. 5), and a ball screw. The X-axis direction moving body supports the rotator 50. When the X-axis direction driving motor 43X is driven, the ball screw rotates, and the rotator 50 and the workpiece holder 30 move in the X-axis directions, together with the X-axis direction moving body.

In this embodiment, the mover 40 moves the cutter 20 in the Z-axis directions and the Y-axis directions and moves the workpiece holder 30 and the rotator 50 in the X-axis directions. However, the configuration of the mover 40 is not limited to the embodiment described above. It is sufficient for the Z-axis direction mover 40Z to move the cutter 20 in the Z-axis directions relative to the workpiece holder 30 by moving at least one of the cutter 20 and a set of the workpiece holder 30 and the rotator 50, and which of the cutter 20 or the set of the workpiece holder 30 and the rotator 50 is to be moved is not limited. Similarly, it is sufficient for the Y-axis direction mover 40Y to move the cutter 20 in the Y-axis directions relative to the workpiece holder 30 and the rotator 50 by moving at least one of the cutter 20 and a set of the workpiece holder 30 and the rotator 50. It is sufficient for the X-axis direction mover 40X to move the workpiece holder 30 and the rotator 50 in the X-axis directions relative to the cutter 20 by moving at least one of the cutter 20 and a set of the workpiece holder 30 and the rotator 50.

FIG. 5 is a block diagram of the cutting machine 10. As illustrated in FIG. 5, the controller 60 is connected to the spindle unit 22 and the gripper 23 of the cutter 20, the X-axis direction driving motor 43X of the X-axis direction mover 40X, the Y-axis direction driving motor 43Y of the Y-axis direction mover 40Y, the Z-axis direction driving motor 43Z of the Z-axis direction mover 40Z, the A-axis rotation motor 52A of the A-axis rotator 50A, and the B-axis rotation motor 52B of the B-axis rotator 50B, and controls these members.

The configuration of the controller 60 is not particularly limited. The controller 60 is, for example, a microcomputer. A hardware configuration of the microcomputer is not particularly limited. The microcomputer may include, for example, an interface (I/F) that receives cutting data and other data from external equipment such as a host computer, a central processing unit (CPU) that executes an instruction of a control program, a read only memory (ROM) that stores programs to be executed by the CPU, a random access memory (RAM) that is used as a working area where programs are developed, and a storage such as a memory that stores the programs, the data, and so forth.

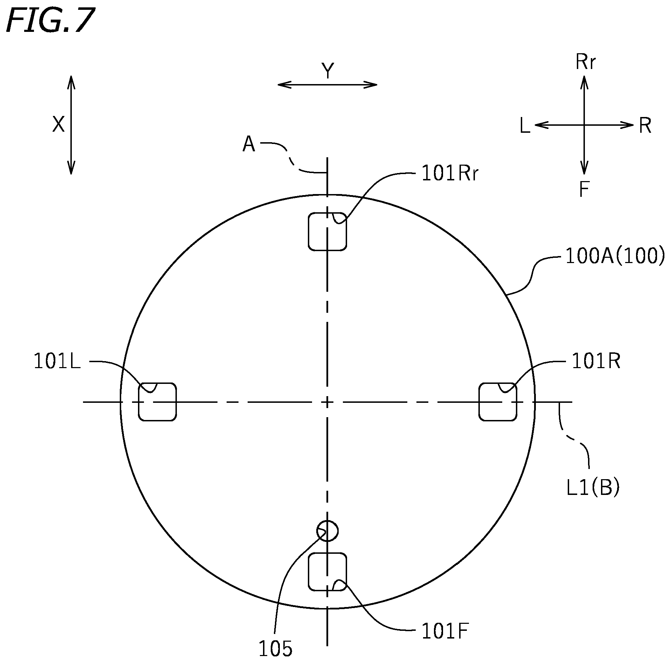

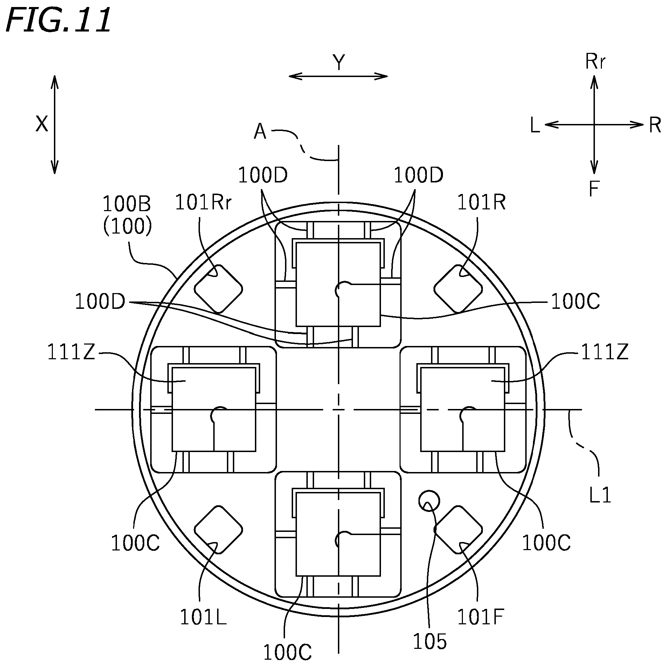

As illustrated in FIG. 5, the controller 60 includes a program register 61, a machining controller 62, an input section 63, a calculator 64, and a corrector 65. In the program register 61, a machining program of a correction piece 100 (see FIGS. 7 and 11) for position correction of the mover 40 is registered. The "position of the mover 40" herein includes positions of the X-axis direction mover 40X, the Y-axis direction mover 40Y, and the Z-axis direction mover 40Z and rotation positions of the A-axis rotator 50A and the B-axis rotator 50B. The "position correction" herein includes correction of coordinates of a specific point such as an origin and correction of adjusting a distance and an angle on coordinates to an actual distance and an actual angle. In a dental cutting machine, operational errors can occur because of aging or other reasons, resulting in manufacturing of products deviating from dimensions specified in a machining program. The position correction of the mover 40 is work of correcting such errors and modifying the state of the cutting machine 10 to produce a product with dimensions as specified in the machining program. The contents of the "position of the mover" and the "position correction" can vary depending on the configuration of the cutter and the contents of correction.

The correction piece 100 is set at a predetermined shape and is a product obtained by cutting the machined object 1, and dimensions of a predetermined portion of the correction piece 100 are measured. The position of the mover 40 is corrected based on measured dimensions of the correction piece 100. The correction piece 100 will be described in detail later. The program register 61 may store machining data of a product other than the correction piece 100.

The machining controller 62 controls the cutter 20 and the mover 40 based on the machining program and causes the correction piece 100 to be machined. A measurement result of dimensions of a predetermined portion of the correction piece 100 is input to the input section 63. The calculator 64 calculates a correction value to be set in the mover 40 based on a result input to the input section 63. The corrector 65 sets the correction value calculated by the calculator 64 in the mover 40. The controller 60 may include other machining parts, but these parts are neither illustrated nor described herein.

The cutting machine 10 may be configured such that a correction value calculated in an external unit based on measured dimensions of the correction piece 100 can be input to the cutting machine 10. In this case, a main part for calculating a correction value may be, for example, a calculator in which software for calculating a correction value is installed or an operator who performs correction work. A correction method for the cutting machine 10 includes: a program step of inputting a machining program of the correction piece 100 to the cutting machine 10; a mounting step of mounting a material (machined object 1 herein) for the correction piece 100 to the cutting machine 10 to which the machining program has been input; a machining step of machining the correction piece 100 from the material by the cutting machine 10 based on the machining program; a measurement step of measuring a dimension of a predetermined portion of the correction piece 100 machined in the machining step; a calculation step of calculating a correction value based on the dimension measured in the measurement step; and an input step of inputting the correction value calculated in the calculation step to the cutting machine 10. A main part or a method that performs each step is not particularly limited.

### [Machining of Correction Piece and Correction of Cutting Machine: First Stage]

An example of machining of the correction piece 100 and a correction process of the cutting machine 10 using the correction piece 100 will now be described. The process described below is merely an example, and the correction process of the cutting machine 10 is not limited to this example.

In this embodiment, the correction process of the cutting machine 10 includes a first stage including a first mounting step, a first machining step, a first measurement step, a first calculation step, and a first input step, and a second stage including a second mounting step, a second machining step, a second measurement step, a second calculation step, and a second input step. The second stage is performed after the first stage. First, the first stage will be described.

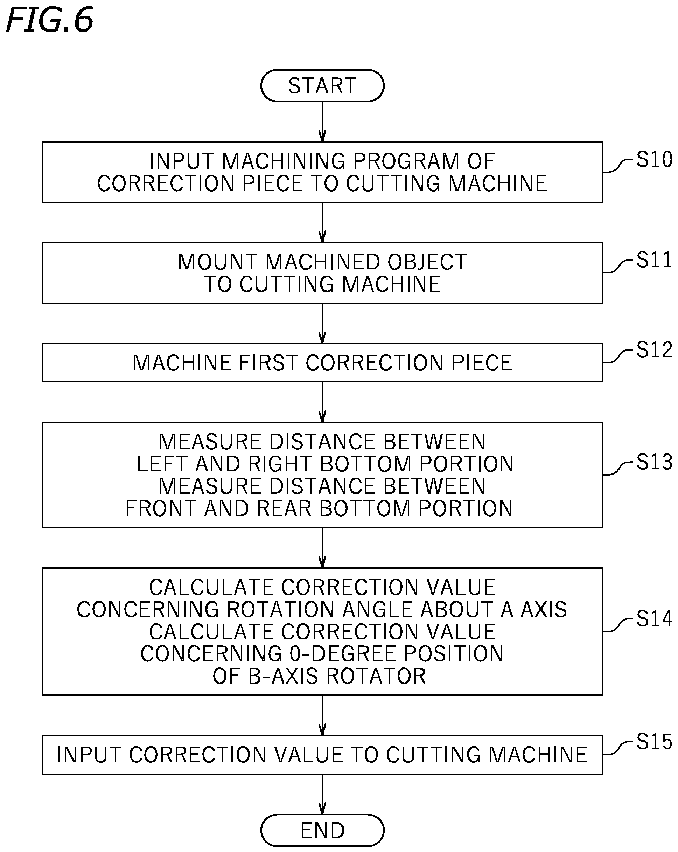

FIG. 6 is a flowchart of the first stage. As shown in FIG. 6, the first stage includes a program step S10, a first mounting step S11, a first machining step S12, a first measurement step S13, a first calculation step S14, and a first input step S15. The program step S10 is included in the first stage for convenience of the drawing, but does not need to be performed in every correction work, and basically only needs to be performed once. In the program step S10, a machining program of the correction piece 100 is input to the cutting machine 10. The machining program includes a first machining program for machining a first correction piece 100A (see FIG. 7) produced in the first machining step S12, and a second machining program for machining a second correction piece 100B (see FIG. 11) from the first correction piece 100A in the second stage.

In the first mounting step S11, a material for the correction piece 100, which is a disc-shaped machined object 1 attached to the adaptor 5 herein, is mounted to the cutting machine 10 to which the machining program of the correction piece 100 has been input. The material for the machined object 1 is preferably an easy-cutting material, for example, wax. The easy-cutting material refers to a material having high dimensional reproducibility after cutting and is less likely to cause wear on the cutting tool 6. Mounting orientation (bottom and top, front and rear, and left and right orientations) of the machined object 1 to the cutting machine 10 is not particularly limited.

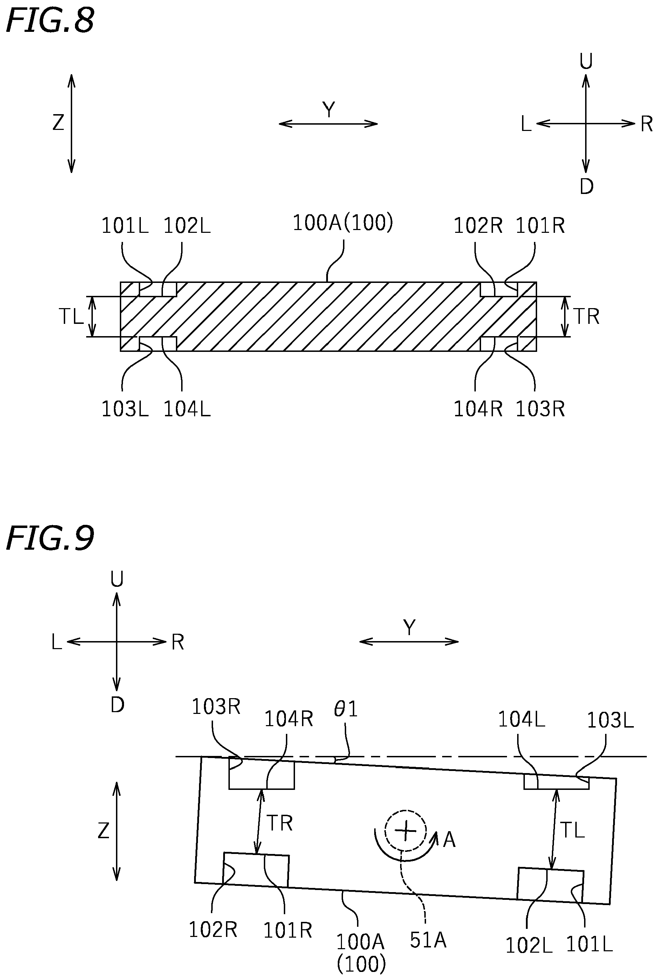

In the first machining step S12, based on the first machining program, the cutting machine 10 obtains the first correction piece 100A from the machined object 1 by machining. FIG. 7 is a plan view of the first correction piece 100A. FIG. 8 is a cross-sectional view of the first correction piece 100A. As illustrated in FIGS. 7 and 8, in the first correction piece 100A, recesses 101Rr through 101L are machined in the 0 o'clock, 3 o'clock, 6 o'clock, and 9 o'clock positions, with the rearward direction along the X-axis directions considered as the 0 o'clock position. In the following direction, the recess in the 0 o'clock position will be also referred to as a rear recess 101Rr, the recess in the 3 o'clock position will be also referred to as a right recess 101R, the recess in the 6 o'clock position will be also referred to as a front recess 101F, and the recess in the 9 o'clock position will be also referred to as a left recess 101L. The right recess 101R is located rightward of the rotation shaft 51A (represented as the axis A in FIG. 7) of the A-axis rotator 50A in the Y-axis directions, and the left recess 101L is located leftward of the rotation shaft 51A in the Y-axis directions. The right recess 101R and the left recess 101L herein are symmetrically located in the left-right direction with respect to the rotation shaft 51A.

The front recess 101F is located forward of the rotation shaft 51B (represented as the axis B in FIG. 7) of the B-axis rotator 50B in the X-axis directions, and the rear recess 101Rr is located rearward of the rotation shaft 51B in the X-axis directions. The front recess 101F and the rear recess 101Rr are symmetrically located in the front-rear direction (symmetrically in the front-rear direction along the X-axis directions) with respect to the rotation shaft 51B.

FIG. 8 is a longitudinal cross-sectional view of the first correction piece 100A taken along a plane passing through the right recess 101R and the left recess 101L and extending in the Z-axis directions. As illustrated in FIG. 8, a bottom portion 102R of the right recess 101R and a bottom portion 102L of the left recess 101L are flat. The bottom portion 102R of the right recess 101R and the bottom portion 102L of the left recess 101L extend in the X-axis directions and the Y-axis directions, respectively. Although the cross section is not shown, similarly, the bottom portions of the front recess 101F and the rear recess 101Rr are also flat.

As illustrated in FIG. 8, a bottom-side right recess 103R and a bottom-side left recess 103L corresponding to the right recess 101R and the left recess 101L are formed on the bottom sides of the right recess 101R and the left recess 101L. A bottom portion 104R of the bottom-side right recess 103R and a bottom portion 104L of the bottom-side left recess 103L are also flat. The right pair of upper and lower bottom portions 102R and 104R defines an upper end and a lower end of an uncut portion between the bottom portions, and defines a thickness TR of the uncut portion. The left pair of upper and lower bottom portions 102L and 104L defines an upper end and a lower end of an uncut portion of the bottom portions, and defines a thickness TL of the uncut portion. Although the cross section is not shown, similar recesses are also formed on the bottom sides of the front recess 101F and the rear recess 101Rr.

The first machining program forms one or more first flat surfaces extending in the X-axis directions and the Y-axis directions on each of one side and the other side of the rotation shaft 51A in the Y-axis directions (right side and left side herein) by the cutting tool 6 in a state where the workpiece holder 30 is held at a predetermined first angle about the rotation shaft 51A of the A-axis rotator 50A. Accordingly, the bottom portion 102R of the right recess 101R and the bottom portion 102L of the left recess 101L are formed as the first flat surfaces. The first machining program herein forms the first flat surfaces 102R and the 102L (bottom portions 102R and 102L) at the right and left of the rotation shaft 51A by the cutting tool 6 in a state where the workpiece holder 30 is held in a 0-degree position about the rotation shaft 51A. The first angle is not limited to 0 degrees. The first flat surfaces 102R and 102L (bottom portions 102R and 102L) only need to sandwich the rotation shaft 51A and do not need to be symmetrically located in the left-right direction with respect to the rotation shaft 51A.

The first machining program forms second flat surfaces extending in the X-axis directions and the Y-axis directions on the bottom sides of the plurality of first flat surfaces by the cutting tool 6 in a state where the workpiece holder 30 is held at a second angle shifted from the first angle by 180 degrees. In this manner, the bottom portion 104R of the bottom-side right recess 103R and the bottom portion 104L of the bottom-side left recess 103L are formed as the second flat surfaces. The first machining program herein forms the second flat surfaces 104R and 104L (bottom portions 104R and 104L) on the bottom sides of the first flat surfaces 102R and 102L (bottom portions 102R and 102L) by the cutting tool 6 in a state where the workpiece holder 30 is held in the 180-degree position about the rotation shaft 51A.

The first machining program also forms the front recess 101F, the rear recess 101Rr, an unillustrated bottom-side front recess, and an unillustrated bottom-side rear recess in a similar manner. In this case, the rotation angle of the B-axis rotator 50B is set at 0 degrees. The work of turning over the machined object 1 is performed by rotation about the A axis by the A-axis rotator 50A.

As illustrated in FIG. 7, the first correction piece 100A has an identification mark 105 for identifying right and left in the Y-axis directions. The identification mark 105 is a recess herein. The identification mark 105 is located near the top-side front recess 101F herein. Accordingly, the front side and the top side of the first correction piece 100A are recognized. As a result, the right side and the left side of the first correction piece 100A can also be recognized. If the right side and the left side of the first correction piece 100A are mistaken, the sign of the correction value is reversed. The identification mark 105 is used for preventing such an error in identifying left and right. The first machining program forms the identification mark 105 for identifying one side from the other side in the Y-axis directions, on the first correction piece 100A by the cutting tool 6.

As shown in FIG. 6, in the first measurement step S13, the thicknesses TR and TL in the Z-axis directions between the two top-side bottom portions 102R and 102L and the two bottom-side bottom portions 104R and 104L are measured. This measurement is performed with a micrometer by a person in charge of correction, for example. In the first measurement step S13, the thicknesses in the Z-axis directions between the two top-side bottom portions 102F and 102Rr and the two bottom-side bottom portions are also measured.

As shown in FIG. 6, in the first calculation step S14, based on the dimensions measured in the first measurement step S13, a correction value concerning a rotation angle about the rotation shaft 51A of the A-axis rotator 50A is calculated. The correction value concerning the rotation angle of the A-axis rotator 50A is a correction value for correcting the rotation angle based on a ratio of 180 degrees and an actually measured value obtained by determining an actual value for which the machining program specifies 180 degrees.

FIG. 9 is a schematic view showing the thicknesses TR and TL of an uncut portion in a case where a rotation angle of 180 degrees in a counterclockwise direction in the machining program is actually (180-θ1) degrees. In FIG. 9, the top-side recesses 101R and 101L are shown below the bottom-side recesses 103R and 103L. For simplification, in the example illustrated in FIG. 9, the 0-degree position is correct, and only the 180-degree position is shifted to a negative side by an angle θ1. It should be noted that the shift can occur in the case of the 0-degree position or in both of the cases of the 0-degree position and the 180-degree position. As illustrated in FIG. 9, in the case where the rotation angle of the A-axis rotator 50A is shifted to a negative side, at the 180-degree position in the program, a left portion of the first correction piece 100A at the left of the rotation shaft 51A is located above a right portion of the first correction piece 100A at the right of the rotation shaft 51A in the Z-axis directions (where the left portion and the right portion herein refer to a left portion and a right portion when the bottom side serves as an upper surface, that is, a left portion and a right portion respectively corresponding to left and right in FIG. 9). Thus, the bottom-side right recess 103R (left recess in FIG. 9) is cut more deeply than the bottom-side left recess 103L (right recess in FIG. 9). Accordingly, the thickness TR becomes smaller than the thickness TL. In a case where the rotation angle of the A-axis rotator 50A is shifted to a positive side, the opposite applies.

The thicknesses TR and TL are measured and a difference between the thicknesses is obtained, thereby calculating a shift of the rotation angle of the A-axis rotator 50A. In the first calculation step S14, a correction value for correcting the shift of the rotation angle of the A-axis rotator 50A is calculated. As shown in FIG. 6, in the first input step S15, the correction value concerning the rotation angle of the A-axis rotator 50A calculated in the first calculation step S14 is input to the cutting machine 10. The terms "calculation" and "input" of a correction value can include automatic calculation and automatic input of a correction value by the cutting machine 10. In this manner, in this embodiment, the correction value includes a correction value concerning the rotation angle about the rotation shaft 51A of the A-axis rotator 50A, and this correction value is a correction value for eliminating a difference between the thicknesses TR and TL measured in the first measurement step S13. This correction value is set in the cutting machine 10 so that a shift of the rotation angle about the rotation shaft 51A of the A-axis rotator 50A can be thereby corrected.

As shown in FIG. 6, in the first calculation step S14, a correction value concerning a 0-degree position of the B-axis rotator 50B is also calculated. When the 0-degree position of the B-axis rotator 50B is shifted, one of a front portion forward of the rotation shaft 51B or a rear portion rearward of the rotation shaft 51B is located above the other. Thus, for reasons similar to those illustrated in FIG. 9, the recess of an upper one of the front portion and the rear portion is deeper than the other. Accordingly, the uncut portion of the upper one of the front portion and the rear portion is thinner than the other. Thus, an error at the 0-degree position of the B-axis rotator 50B can be obtained by obtaining a thickness difference in the uncut portion between the front portion and the rear portion. The correction value concerning the 0-degree position of the B-axis rotator 50B is an angle for correcting this error. In the first input step S15, this correction value is also input to the cutting machine 10. In this embodiment, in angle correction of the B-axis rotator 50B, correction of adjusting the unit angle as performed in the case of the A-axis rotator 50A is not performed.

### [Machining of Correction Piece and Correction of Cutting Machine: Second Stage]

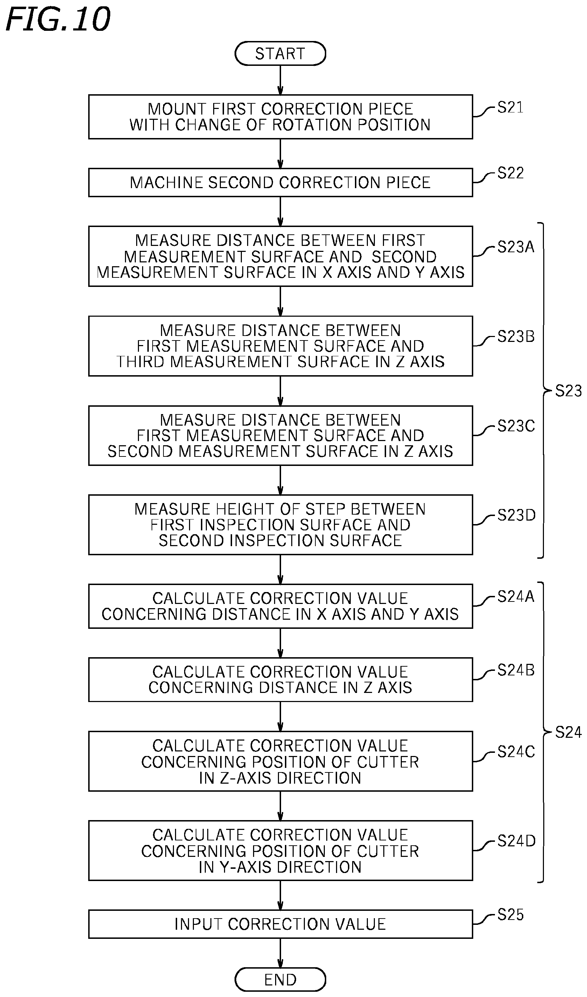

After the first stage, the second stage of correction of the cutting machine 10 is performed. FIG. 10 is a flowchart of the second stage. As shown in FIG. 10, the second stage includes a second mounting step S21, a second machining step S22, a second measurement step S23, a second calculation step S24, and a second input step S25.

The second mounting step S21 is performed after the first machining step S12 through the first input step S15. In the second mounting step S21, the rotation position about the Z axis is changed from the first mounting step S11, and the machined object 1 (first correction piece 100A) is mounted to the cutting machine 10. Although described in detail later, the machining program forms the plurality of recesses 101R and 101L on the line L1 passing through the center of the correction piece 100 in the X-axis directions and extending in the Y-axis directions (see FIG. 7) in the first stage, and forms another measurement surface on the same line L1 (see FIG. 11) in the second stage. In the first stage, the recesses 101R and 101L are located on the line L1 so that an error concerning the rotation angle of the A-axis rotator 50A is magnified to be thereby easily measured. In the second stage, the measurement surface (specifically, a first measurement surface 111Z in the Z-axis directions) is located on the line L1 so that the measurement surface is enlarged and, thereby, dimensions can be easily measured. To avoid overlapping of the plurality of recesses 101R and 101L formed in the first stage and another measurement surface formed in the second stage, in the second mounting step S21, the rotation position about the Z axis is changed from the first mounting step S11, and the first correction piece 100A is mounted to the cutting machine 10. Rotation angle at this time is, for example, 45 degrees about the Z axis as illustrated in FIG. 11, but the rotation angle does not need to be exact. The rotation angle in the second mounting step S21 is not particularly limited as long as a portion formed in the first stage and a portion formed in the second stage do not overlap each other.

In the case of producing the first correction piece 100A and the second correction piece 100B (except a machined portion of the first correction piece 100A) separately, in the second mounting step S21, not the first correction piece 100A but a new machined object 1 may be mounted to the cutting machine 10. The amount of the machined object 1 used in correction of the cutting machine 10 can be reduced by reusing the first correction piece 100A in the second stage.

In the second machining step S22, based on the second machining program, the cutting machine 10 obtains the second correction piece 100B from the first correction piece 100A by machining. FIG. 11 is a plan view of the second correction piece 100B.

As illustrated in FIG. 11, in the second correction piece 100B, four measurement pieces 100C for measuring dimensions are machined in the direction of 0 o'clock, 3 o'clock, 6 o'clock, and 9 o'clock positions, respectively. The four measurement pieces 100C are separated from the disc for measuring dimensions. The four measurement pieces 100C are the same pieces, and arranged in the same orientation. In addition, to eliminate influence of difference in machining accuracy (e.g., difference caused by backlash) among machining directions, the four measurement pieces 100C are machined in the same direction. The plurality of measurement pieces 100C can be machined under the same conditions without arrangement of the measurement pieces 100C in the same orientation. In the following description, the measurement piece 100C in the 0 o'clock position will be also referred to as a rear measurement piece 100C, the measurement piece 100C in the 3 o'clock position will be also referred to as a right measurement piece 100C, the measurement piece 100C in the 6 o'clock position will be also referred to as a front measurement piece 100C, and the measurement piece 100C in the 9 o'clock position will be also referred to as a left measurement piece 100C. The right measurement piece 100C and the left measurement piece 100C are formed on the line L1. The right measurement piece 100C and the left measurement piece 100C are herein symmetrically located in the left-right direction with respect to the rotation shaft 51A (represented as the axis A in FIG. 11). The front measurement piece 100C and the rear measurement piece 100C are symmetrically located in the front-rear direction (front-rear direction along the X-axis directions) with respect to the rotation shaft 51B (represented as the line L1 in FIG. 11). The measurement pieces 100C are separated from the disc by cutting a support 100D. Although not shown, identification signs are machined on the four measurement pieces 100C.

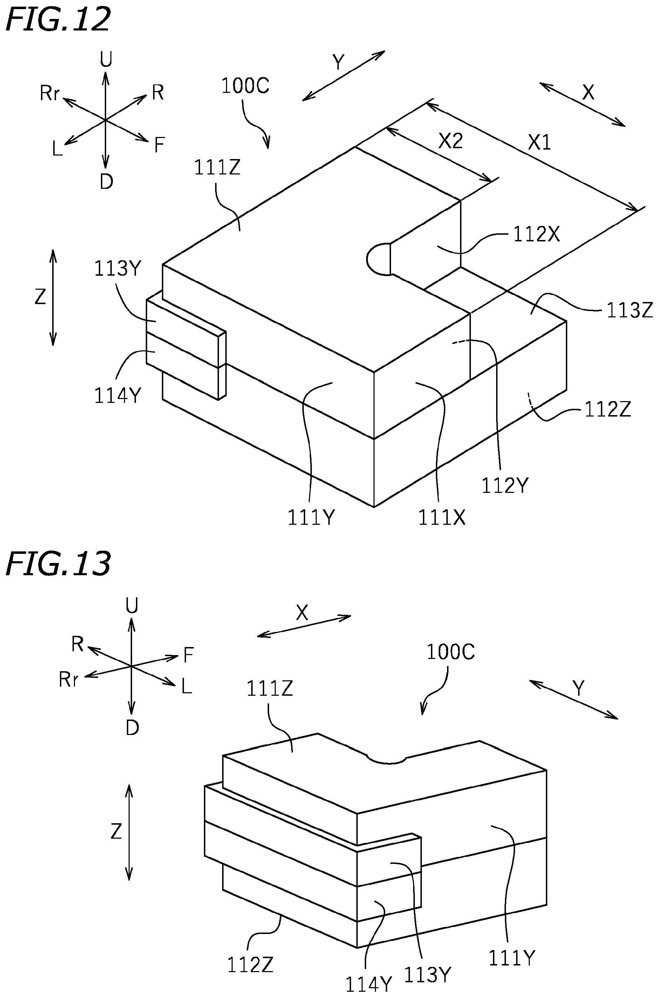

FIG. 12 is a perspective view of the measurement piece 100C seen from the front. FIG. 13 is a perspective view of the measurement piece 100C seen from the rear. As illustrated in FIGS. 12 and 13, the measurement pieces 100C includes two planes 111X and 112X having different coordinates in the X-axis directions and each extending in the Y-axis directions and the Z-axis directions. These two planes will be hereinafter referred to as a first measurement surface 111X in the X-axis directions and a second measurement surface 112X in the X-axis directions. In the machining program, a coordinate of the first measurement surface 111X in the X-axis directions is a first X coordinate, and a coordinate of the second measurement surface 112X in the X-axis directions is a second X coordinate. The second machining program forms the first measurement surface 111X whose coordinate in the X-axis directions is the first X coordinate and the second measurement surface 112X whose coordinate in the X-axis directions is the second X coordinate by the cutting tool 6 on the second correction piece 100B.

As illustrated in FIG. 12, in a manner similar to the X-axis directions, in the Y-axis directions, the measurement piece 100C includes two planes 111Y and 112Y having different coordinates in the Y-axis directions and each extending in the X-axis directions and the Z-axis directions. These two planes will be hereinafter referred to as a first measurement surface 111Y in the Y-axis directions and a second measurement surface 112Y in the Y-axis directions. In the machining program, a coordinate of the first measurement surface 111Y in the Y-axis directions is a first Y coordinate, and a coordinate of the second measurement surface 112Y in the Y-axis directions is a second Y coordinate. The second machining program forms the first measurement surface 111Y whose coordinate in the Y-axis directions is the first Y coordinate and the second measurement surface 112Y whose coordinate in the Y-axis directions is the second Y coordinate by the cutting tool 6 on the second correction piece 100B.

In addition, the measurement piece 100C includes a first measurement surface 111Z, a second measurement surface 112Z, and a third measurement surface 113Z having different coordinates in the Z-axis directions and each extending in the X-axis directions and the Y-axis directions. In the machining program, a coordinate of the first measurement surface 111Z in the Z-axis directions is a first Z coordinate, a coordinate of the second measurement surface 112Z in the Z-axis directions is a second Z coordinate, and a coordinate of the third measurement surface 113Z in the Z-axis directions is a third Z coordinate. The second machining program forms the first measurement surface 111Z whose coordinate in the Z-axis directions is the first Z coordinate and the third measurement surface 113Z whose coordinate in the Z-axis directions is the third Z coordinate by the cutting tool 6 on the second correction piece 100B. The first measurement surface 111Z and the third measurement surface 113Z are formed in a state where the workpiece holder 30 is held at a predetermined angle about the rotation shaft 51A. The predetermined angle herein is 0 degrees. The predetermined angle is not limited to 0 degrees.

The second machining program forms the second measurement surface 112Z whose coordinate in the Z-axis directions is the second Z coordinate by the cutting tool 6 in a state where the workpiece holder 30 is held in the 180-degree position shifted from the 0-degree position by 180 degrees. The second measurement surface 112Z is formed in a state where the workpiece holder 30 reversely rotates about the A axis by 180 degrees from the state in forming the first measurement surface 111Z and the third measurement surface 113Z. The first Z coordinate and the second Z coordinate may be the same coordinate as long as these coordinates are seen as coordinates in the Z-axis directions. However, the first measurement surface 111Z and the second measurement surface 112Z formed on the measurement piece 100C are located at different positions in the Z-axis directions.

As shown in FIG. 13, the measurement piece 100C includes a first inspection surface 113Y and a second inspection surface 114Y for correcting the position of a Y-axis origin relative to the rotation shaft 51A of the A-axis rotator 50A. Each of the first inspection surface 113Y and the second inspection surface 114Y extends in the X-axis directions and the Z-axis directions. The Y-axis coordinate of the first inspection surface 113Y and the Y-axis coordinate of the second inspection surface 114Y are the same in the machining program. The first inspection surface 113Y and the second inspection surface 114Y are arranged side by side in the Z-axis directions.

The second machining program forms the first inspection surface 113Y extending in the Z-axis directions by the cutting tool 6 on the second correction piece 100B in a state where the workpiece holder 30 is held at a predetermined angle about the rotation shaft 51A of the A-axis rotator 50A and is held in a predetermined position in the Y-axis directions. The predetermined angle of the rotation shaft 51A herein is 0 degrees. The predetermined angle is not limited to 0 degrees. In addition, the second machining program forms the second inspection surface 114Y extending in the Z-axis directions by the cutting tool 6 on the second correction piece 100B in a state where the workpiece holder 30 is held at an angle shifted from the predetermined angle by 180 degrees and is held in the predetermined position in the Y-axis directions (the same position as when the first inspection surface 113Y is formed). That is, the first inspection surface 113Y and the second inspection surface 114Y are formed with the workpiece holder 30 inversely rotated about the A axis.

In the machining program, the first inspection surface 113Y and the second inspection surface 114Y are flush with each other. If the position of the Y-axis origin relative to the rotation shaft 51A of the A-axis rotator 50A is shifted, in the second correction piece 100B, a shift occurs between the position of the first inspection surface 113Y in the Y-axis directions and the position of the second inspection surface 114Y in the Y-axis directions. As a result, a step occurs between the first inspection surface 113Y and the second inspection surface 114Y.

As shown in FIG. 10, in the second measurement step S23, a distance in the X-axis directions between the first measurement surface 111X and the second measurement surface 112X in the X-axis directions is measured. Although the measurement method thereof is not particularly limited, a distance X1 between the first measurement surface 111X and another surface parallel to the first measurement surface 111X and a distance X2 between the second measurement surface 112X and the another surface may be measured with a micrometer so that a distance between the first measurement surface 111X and the second measurement surface 112X in the X-axis directions can be obtained from a difference between the distances X1 and X2. The distance between the first measurement surface 111X and the second measurement surface 112X in the X-axis directions may be directly measured with, for example, a micrometer.

In the second measurement step S23, a distance in the Y-axis directions between the first measurement surface 111Y and the second measurement surface 112Y in the Y-axis directions is measured. As shown in FIG. 10, steps for these axes in the second measurement step S23 will be referred to as a step S23A. In step S23A, an average value is calculated from measured values obtained from the four measurement pieces 100C, and the obtained average value is used as a representative value. The method for obtaining a representative value from the plurality of measured values is not limited to the average value processing. As the representative value of the measured values, a median may be employed, for example.

In the second measurement step S23, a distance in the Z-axis directions between the first measurement surface 111Z and the third measurement surface 113Z in the Z-axis directions is measured. Both the first measurement surface 111Z and the third measurement surface 113Z are formed in the state where the workpiece holder 30 is held in the 0-degree position. As shown in FIG. 10, this step in the second measurement step S23 will be referred to as step S23B. In step S23B, a distance in the Z-axis directions between the second measurement surface 112Z and the third measurement surface 113Z in the Z-axis directions may be measured. In step S23B, measured values obtained from the four measurement pieces 100C are averaged. The method for processing a plurality of measured values is not limited to the average value processing.

In the second measurement step S23, a distance in the Z-axis directions between the first measurement surface 111Z and the second measurement surface 112Z in the Z-axis directions is also measured. The first measurement surface 111Z and the second measurement surface 112Z are formed by reversely rotating the workpiece holder 30 about the A axis by 180 degrees. As shown in FIG. 10, this step in the second measurement step S23 will be referred to as step S23C. In step S23C, measured values obtained from the four measurement pieces 100C are averaged. The method for processing a plurality of measured values is not limited to the average value processing.

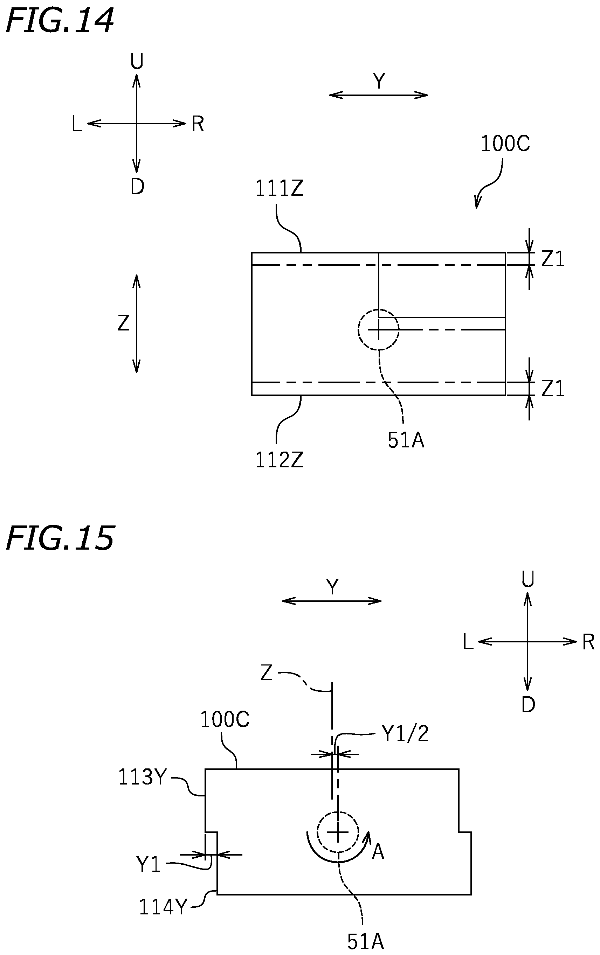

In addition, in the second measurement step S23, the amount of shift between the first inspection surface 113Y and the second inspection surface 114Y in the Y-axis directions, that is, a height Y1 of a step between the first inspection surface 113Y and the second inspection surface 114Y in the Y-axis directions (see FIG. 15), is measured. As shown in FIG. 10, this step in the second measurement step S23 will be referred to as step S23D. In step S23D, measured values obtained from the four measurement pieces 100C are averaged. The method for processing a plurality of measured values is not limited to the average value processing.

As shown in FIG. 10, in the second calculation step S24, a correction value concerning a distance in the X-axis directions, a correction value concerning a distance in the Y-axis directions, a correction value concerning a distance in the Z-axis directions, a correction value concerning a position of the cutter 20 in the Z-axis directions relative to the rotation shaft 51A of the A-axis rotator 50A, and a correction value concerning a position of the cutter 20 in the Y-axis directions relative to the rotation shaft 51A are calculated. As shown in FIG. 10, the step of calculating a correction value concerning a distance in the X-axis directions and a correction value concerning a distance in the Y-axis directions will be hereinafter referred to as step S24A. The step of calculating a correction value concerning a distance in the Z-axis directions will be hereinafter referred to as step S24B. The step of calculating a correction value concerning a position of the cutter 20 in the Z-axis directions relative to the rotation shaft 51A and the step of calculating a correction value concerning a position of the cutter 20 in the Y-axis directions relative to the rotation shaft 51A will be referred to as step S24C and step S24D, respectively.

The correction values concerning the distances in the X-axis directions and the Y-axis directions in step S24A are herein calculated after correction concerning the rotation angle of the A-axis rotator 50A. In this embodiment, the correction concerning the rotation angle of the A-axis rotator 50A is performed in the first input step S15 in the first stage. However, the correction values concerning the distances in the X-axis directions and the Y-axis directions do not depend on accuracy of the rotation angle of the A-axis rotator 50A, and thus, the correction values concerning the distances in the X-axis directions and the Y-axis directions may be calculated before correction concerning the rotation angle of the A-axis rotator 50A. In this embodiment, the steps are performed in the order described above to perform the machining step through the input step as efficiently as possible.

Regarding the X-axis directions, in step S24A, a correction value for adjusting the distance between the first measurement surface 111X and the second measurement surface 112X in the machining program to an actually measured value of the distance between the first measurement surface 111X and the second measurement surface 112X (X1-X2 in the case illustrated in FIG. 12) is calculated. The distance between the first measurement surface 111X and the second measurement surface 112X in the machining program is, in other words, a difference in coordinate value between the first X coordinate and the second X coordinate. The correction value of the distance in the X-axis directions is a correction value for adjusting the difference in coordinate value between the first X coordinate and the second X coordinate to the distance measured in the second measurement step S23. For example, in a case where the actually measured value is larger than the distance in the machining program, this means that dimensions of the final product are larger than those programmed, and a correction value for reducing the length in the X-axis directions in the machining program (correction value smaller than one) is calculated. The same holds for the Y-axis directions.

In step S24B, a process similar to that in step S24A is performed for the Z-axis directions. In step S24B, a correction value for adjusting a distance between the first measurement surface 111Z and the third measurement surface 113Z in the machining program to an actually measured value of the distance between the first measurement surface 111Z and the third measurement surface 113Z is calculated. The correction value concerning the distance in the Z-axis directions does not depend on accuracy of the rotation angle of the A-axis rotator 50A, either. Thus, the correction value concerning the distance in the Z-axis directions may also be calculated before correction concerning the rotation angle of the A-axis rotator 50A. Regarding the distances in the X-axis directions, the Y-axis directions, and the Z-axis directions, correction of a unit distance is performed. If the distances in the X-axis directions, the Y-axis directions, and the Z-axis directions are shifted, a difference between each distance in the machining program and the actually measured value increases in proportion to the distance in the machining program.

As shown in FIG. 10, in step S24C, a correction value concerning the position of the cutter 20 in the Z-axis directions relative to the rotation shaft 51A is calculated. The correction value concerning the position of the cutter 20 in the Z-axis directions is preferably calculated after correction concerning the angle of the workpiece holder 30 and correction of the distance in the Z-axis directions, as in this embodiment. Calculation of the correction value concerning the position of the cutter 20 in the Z-axis directions may be performed independently of correction of the distance in the Z-axis directions. FIG. 14 is a schematic value illustrating a case where the position of the cutter 20 in the Z-axis directions relative to the rotation shaft 51A is shifted. As illustrated in FIG. 14, if the position of the cutter 20 in the Z-axis directions relative to the rotation shaft 51A is shifted by Z1 (assumed to be shifted by Z1 upward in the Z-axis directions herein), the first measurement surface 111Z is located above the position in the machining program (indicated by chain double-dashed lines) in the Z-axis directions by Z1. The correction value concerning the position of the cutter 20 in the Z-axis directions is the amount of shift of the origin position in the Z-axis directions. Similarly, the second measurement surface 112Z is also located above the position in the machining program by Z1 in the Z-axis directions (where the second measurement surface 112Z is located below the position in the machining program in FIG. 14). Thus, the distance between the first measurement surface 111Z and the second measurement surface 112Z measured in step S23C is larger than the distance between the first measurement surface 111Z and the second measurement surface 112Z in the Z-axis directions in the machining program by twice the value of Z1. The difference between the distance in the machining program and the actually measured value is uniform, independently of the distance in the machining program. The correction value concerning the position of the cutter 20 in the Z-axis directions is a correction value for eliminating a difference between the measured distance between the first measurement surface 111Z and the second measurement surface 112Z and the distance between the first measurement surface 111Z and the second measurement surface 112Z in the Z-axis directions in the machining program. In the case illustrated in FIG. 14, the correction value is a correction value for shifting the origin position in the Z-axis directions downward by Z1.

In step S24D, a correction value concerning the position of the cutter 20 in the Y-axis directions relative to the rotation shaft 51A is calculated. The correction value concerning the position of the cutter 20 in the Y-axis directions is preferably obtained after correction concerning the distance in the Y-axis directions in step S24A, as in this embodiment. Calculation of the correction value concerning the position of the cutter 20 in the Y-axis directions may be performed independently of correction of the distance in the Y-axis directions. FIG. 15 is a schematic view illustrating a case where the position of the cutter 20 in the Y-axis directions relative to the rotation shaft 51A is shifted. In this embodiment, a coordinate of the rotation shaft 51A in the Y-axis directions coincides with the origin coordinate in the Y-axis directions (represented as the Z axis in FIG. 15). Thus, as illustrated in FIG. 15, when the origin position in the Y-axis directions is shifted relative to the rotation shaft 51A, the coordinate position in the Y-axis directions relative to the second correction piece 100B changes between the state where the rotation shaft 51A is located in the 0-degree position and the state where the rotation shaft 51A is located in the 180-degree position. In step S24D, from an actually measured value Y1 of a step between the first inspection surface 113Y and the second inspection surface 114Y having the same coordinate in the Y-axis directions, a shift of the origin position in the Y-axis directions relative to the rotation shaft 51A is calculated. The correction value herein is equal to a half Y1/2 of a measured dimension Y1 of the step. The correction value is the amount of shift of the origin position in the Y-axis directions. In this manner, the correction value concerning the position of the cutter 20 in the Y-axis directions is a correction value for eliminating the shift measured in step S23D.

As shown in FIG. 10, in step S25, the correction value calculated in the second calculation step S24 is input to the cutting machine 10. In this manner, the distance in the X-axis directions, the distance in the Y-axis directions, the distance in the Z-axis directions, the position of the cutter 20 in the Z-axis directions relative to the rotation shaft 51A, and the position of the cutter 20 in the Y-axis directions relative to the rotation shaft 51A are corrected. This configuration enables a product as designed according to the machining program can be produced again.

### [Other Embodiments]

The cutting machine and the correction method of the cutting machine according to one embodiment have been described above. The technique disclosed here can be carried out as other embodiments. For example, the shape of the correction pieces and the correction work described above are merely examples, and can change depending on the configuration of the cutting machine. Considering the configuration of the cutting machine, correction of portions that may include errors and correction of portions where errors are less likely to occur may be omitted. Correction not performed in the embodiment described above may be performed when it is preferable to perform the correction in consideration of the configuration of the cutting machine.

The configuration of the cutting machine is not particularly limited. For example, in the embodiment described above, the A-axis rotator 50A and the B-axis rotator 50B are mounted on the X-axis direction moving body and moves along the X-axis directions together with the X-axis direction moving body. Thus, the origin position in the X-axis directions relative to the A-axis rotator 50A is less likely to be shifted, and does not need correction. Alternatively, the A-axis rotator and the B-axis rotator may not be moved by the X-axis direction mover. For example, the A-axis rotator and the B-axis rotator may be fixed and the cutting tool may move also in the X-axis directions. In this case, the origin position in the X-axis directions relative to the rotation shaft (e.g., rotation shaft 51B) of the rotator may be corrected. The rotator may not change orientation of the workpiece holder and may change orientation of the cutting tool.

The machined object may not be held by the cutting machine through the adaptor, and may be held directly by the cutting machine. The machined object as a material for the correction piece may not be a disk-shaped disc.

### DESCRIPTION OF REFERENCE CHARACTERS

- 1: machined object
- 6: cutting tool
- 10: dental cutting machine
- 20: cutter (tool holder)
- 30: workpiece holder
- 40: mover
- 40X: X-axis direction mover
- 40Y: Y-axis direction mover
- 40Z: Z-axis direction mover
- 50: rotator
- 50A: A-axis rotator
- 51A: rotation shaft
- 50B: B-axis rotator
- 51B: rotation shaft
- 60: controller
- 61: program register
- 62: machining controller
- 63: input section
- 64: calculator
- 65: corrector
- 100: correction piece
- 102L: bottom portion (first flat surface) of left recess
- 102R: bottom portion (first flat surface) of right recess
- 104L: bottom portion (second flat surface) of bottom-side left recess
- 104R: bottom portion (second flat surface) of bottom-side right recess
- 105: identification mark (identifier)
- 111X: first measurement surface in X-axis directions
- 111Y: first measurement surface in Y-axis directions
- 111Z: first measurement surface in Z-axis directions
- 112X: second measurement surface in X-axis directions
- 112Y: second measurement surface in Y-axis directions
- 112Z: second measurement surface in Z-axis directions
- 113Z: third measurement surface in Z-axis directions
- 113Y: first inspection surface
- 114Y: second inspection surface

## Claims

1. A correction method for a dental cutting machine (10) comprising:
a program step of inputting a machining program of a correction piece (100) to a dental cutting machine (10);
a mounting step of mounting a material (1) for the correction piece (100) to the dental cutting machine (10) to which the machining program has been input;
a machining step of machining the correction piece (100) from the material (1) by the dental cutting machine (10) based on the machining program;
a measurement step of measuring a dimension of a predetermined portion of the correction piece (100) machined in the machining step;
a calculation step of calculating a correction value based on the dimension measured in the measurement step; and
an input step of inputting the correction value calculated in the calculation step to the dental cutting machine (10), wherein
the dental cutting machine (10) includes
a tool holder (20) that holds a cutting tool (6),
a workpiece holder (30) that holds the correction piece (100), and
a mover (40) that moves at least one of the tool holder (20) and the workpiece holder (30) to thereby move the cutting tool (6) in a predetermined moving direction relative to the workpiece holder (30), **characterized in that**,
the machining program forms a first plane (111X) whose coordinate in the moving direction is a first coordinate and a second plane (112X) whose coordinate in the moving direction is a second coordinate by the cutting tool (6) on the correction piece (100),
in the measurement step, a distance between the first plane (111X) and the second plane (112X) in the moving direction is measured,
the correction value includes a correction value concerning the distance in the moving direction, and
the correction value concerning the distance in the moving direction is a correction value for adjusting a difference in coordinate value between the first coordinate and the second coordinate to the distance measured in the measurement step.

2. The correction method for the dental cutting machine (10) according to claim 1, wherein
the dental cutting machine (10) includes
a tool holder (20) that holds a rod-shaped cutting tool (6) extending in predetermined Z-axis directions,
a workpiece holder (30) that holds the material (1) for the correction piece (100),
a rotator (50A) that rotates the workpiece holder (30) about a rotation shaft (51A) extending in X-axis directions orthogonal to the Z-axis directions to thereby change orientation of the workpiece holder (30) relative to the cutting tool (6),
a Z-axis direction mover (40Z) that moves at least one of the tool holder (20) and a set of the workpiece holder (30) and the rotator (50A) to thereby move the tool holder (20) in the Z-axis directions relative to the workpiece holder (30), and
a Y-axis direction mover (40Y) that moves at least one of the tool holder (20) and the set of the workpiece holder (30) and the rotator (50A) to thereby move the tool holder (20) in Y-axis directions orthogonal to the Z-axis directions and the X-axis directions relative to the workpiece holder (30),
the machining program
forms one or more first flat surfaces (102R, 102L) extending in the X-axis directions and the Y-axis directions on each of one side and another side of the rotation shaft (51A) in the Y-axis directions by the cutting tool (6) in a state where the workpiece holder (30) is held at a predetermined first angle about the rotation shaft (51A), and
forms second flat surfaces (104R, 104L) extending in the X-axis directions and the Y-axis directions on bottom sides of the first flat surfaces (102R, 102L) by the cutting tool (6) in a state where the workpiece holder (30) is held at a second angle shifted from the first angle by 180 degrees,
in the measurement step, thicknesses between the first flat surfaces (102R, 102L) and the second flat surfaces (104R, 104L) in the Z-axis directions are measured,
the correction value includes a correction value concerning a rotation angle of the rotator (50A) about the rotation shaft (51A), and
the correction value concerning the rotation angle of the rotator (50A) is a correction value for eliminating a difference between the thicknesses measured in the measurement step.

3. The correction method for the dental cutting machine (10) according to claim 2, wherein
the machining program forms an identifier (105) for identifying one side and another side in the Y-axis directions, on the correction piece (100) by the cutting tool (6).

4. The correction method for the dental cutting machine (10) according to claim 2 or 3, wherein
the machining program
forms a first measurement surface (111Z) whose coordinate in the Z-axis directions is a first coordinate by the cutting tool (6) in a state where the workpiece holder (30) is held at a predetermined angle about the rotation shaft (51A), and
forms a second measurement surface (112Z) whose coordinate in the Z-axis directions is a second coordinate by the cutting tool (6) in a state where the workpiece holder (30) is held at an angle shifted from the predetermined angle by 180 degrees,
in the measurement step, a distance between the first measurement surface (111Z) and the second measurement surface (112Z) in the Z-axis directions is measured,
the correction value includes a correction value concerning a position of the tool holder (20) in the Z-axis directions relative to the rotation shaft (51A), and
the correction value concerning the position of the tool holder (20) in the Z-axis directions is a correction value for eliminating a difference between the measured distance between the first measurement surface (111Z) and the second measurement surface (112Z) and the distance between the first measurement surface (111Z) and the second measurement surface (112Z) in the Z-axis directions in the machining program, and is calculated after correction concerning a rotation angle of the rotator (50A) about the rotation shaft (51A).

5. The correction method for the dental cutting machine (10) according to claim 4, wherein
the machining program forms the first flat surfaces (102R, 102L), the second flat surfaces (104R, 104L), the first measurement surface (111Z), and the second measurement surface (112Z) on a line passing through a center of the correction piece (100) in the X-axis directions and extending in the Y-axis directions,
the machining step includes
a first machining step of forming the first flat surfaces (102R, 102L) and the second flat surfaces (104R, 104L) on the correction piece (100), and
a second machining step of forming the first measurement surface (111Z) and the second measurement surface (112Z) on the correction piece (100),
the measurement step, the calculation step, and the input step include
a first measurement step, a first calculation step, and a first input step, respectively, performed after the first machining step, and
a second measurement step, a second calculation step, and a second input step, respectively, performed after the second machining step, and
the mounting step includes
a first mounting step of mounting the material (1) for the correction piece (100) to the dental cutting machine (10) before the first machining step, and
a second mounting step of mounting the material (1) to the dental cutting machine (10) while changing a rotation position about the Z axis from the first mounting step, after the first machining step, the first measurement step, the first calculation step, and the first input step.

6. The correction method for the dental cutting machine (10) according to any one of claims 2 to 5, wherein
the machining program
forms a first inspection surface (113Y) extending in the Z-axis directions by the cutting tool (6) on the correction piece (100) in a state where the workpiece holder (30) is held at a predetermined angle about the rotation shaft (51A) and is held in a predetermined position in the Y-axis directions, and
forms a second inspection surface (114Y) extending in the Z-axis directions by the cutting tool (6) on the correction piece (100) in a state where the workpiece holder (30) is held at an angle shifted from the predetermined angle by 180 degrees and is held in the predetermined position in the Y-axis directions,
in the measurement step, an amount of shift between the first inspection surface (113Y) and the second inspection surface (114Y) concerning the Y-axis directions is measured,
the correction value includes a correction value concerning a position of the tool holder (20) in the Y-axis directions relative to the rotation shaft (51A), and
the correction concerning the position of the tool holder (20) in the Y-axis directions is a correction value for eliminating the measured shift, and is calculated after correction concerning a rotation angle of the rotator (50A) about the rotation shaft (51A).

7. A dental cutting machine (10) comprising:
a tool holder (20) that holds a cutting tool (6);
a workpiece holder (30) that holds a machined object (1);
a mover (40) configured to move at least one of the tool holder (20) and the workpiece holder (30) to thereby move the cutting tool (6) in a predetermined moving direction relative to the workpiece holder (30); and
a controller (60) configured to control the mover (40), **characterized in that**,
the controller (60) includes
a program register (61) in which a machining program of a correction piece (100) for correcting a position of the mover (40) is registered,
a machining controller (62) configured to control the mover (40) based on the machining program and to machine the correction piece (100) to form a first plane (111X) whose coordinate in the moving direction is a first coordinate and a second plane (112X) whose coordinate in the moving direction is a second coordinate,
an input section (63) to which a measurement result of a distance in the moving direction between the first plane (111X) and the second plane (112X) is input,
a calculator (64) configured to calculate a correction value concerning the distance to be set in the mover (40) based on the result input to the input section (63), and
a corrector (65) that is configured to set the correction value calculated in the calculator (64) in the mover (40).

## Patentansprüche

1. Korrekturverfahren für eine dentale Schneidemaschine (10), umfassend:
einen Programmschritt zum Eingeben eines Bearbeitungsprogramms für ein Korrekturstück (100) in eine dentale Schneidemaschine (10);
einen Befestigungsschritt zum Befestigen eines Materials (1) für das Korrekturstück (100) an der Dentalschneidemaschine (10), in die das Bearbeitungsprogramm eingegeben wurde;
einen Bearbeitungsschritt zum Bearbeiten des Korrekturstücks (100) aus dem Material (1) durch die dentale Schneidemaschine (10) auf der Grundlage des Bearbeitungsprogramms;
einen Messschritt zum Messen eines Maßes eines vorbestimmten Abschnitts des im Bearbeitungsschritt bearbeiteten Korrekturstücks (100);
einen Berechnungsschritt zum Berechnen eines Korrekturwerts auf der Grundlage des im Messschritt gemessenen Maßes; und
einen Eingabeschritt zum Eingeben des im Berechnungsschritt berechneten Korrekturwerts in die dentale Schneidemaschine (10), wobei
die dentale Schneidemaschine (10) umfasst
einen Werkzeughalter (20), der ein Schneidwerkzeug (6) hält,
einen Werkstückhalter (30), der das Korrekturstück (100) hält, und
einen Antrieb (40), der zumindest entweder den Werkzeughalter (20) oder den Werkstückhalter (30) bewegt, um dadurch das Schneidwerkzeug (6) in einer vorbestimmten Bewegungsrichtung relativ zum Werkstückhalter (30) zu bewegen, **dadurch gekennzeichnet, dass**:
das Bearbeitungsprogramm eine erste Ebene (111X), deren Koordinate in der Bewegungsrichtung eine erste Koordinate ist, und eine zweite Ebene (112X), deren Koordinate in der Bewegungsrichtung eine zweite Koordinate ist, durch das Schneidwerkzeug (6) auf dem Korrekturstück (100) bildet,
im Messschritt ein Abstand zwischen der ersten Ebene (111X) und der zweiten Ebene (112X) in Bewegungsrichtung gemessen wird,
der Korrekturwert einen Korrekturwert bezüglich des Abstands in Bewegungsrichtung umfasst, und
der Korrekturwert bezüglich des Abstands in Bewegungsrichtung ein Korrekturwert zum Anpassen einer Differenz im Koordinatenwert zwischen der ersten Koordinate und der zweiten Koordinate an den im Messschritt gemessenen Abstand ist.

2. Korrekturverfahren für die dentale Schneidemaschine (10) nach Anspruch 1, wobei
die dentale Schneidemaschine (10) umfasst
einen Werkzeughalter (20), der ein stabförmiges Schneidwerkzeug (6) hält, das sich in vorbestimmten Z-Richtungen erstreckt,
einen Werkstückhalter (30), der das Material (1) für das Korrekturstück (100) hält,
einen Rotator (50A), der den Werkstückhalter (30) um eine Drehachse (51A) dreht, die sich in X-Richtungen orthogonal zu den Z-Richtungen erstreckt, um dadurch die Ausrichtung des Werkstückhalters (30) relativ zum Schneidwerkzeug (6) zu ändern,
eine Z-Achsen-Verschiebungseinrichtung (40Z), die zumindest entweder den Werkzeughalter (20) oder eine Kombination aus dem Werkstückhalter (30) und dem Rotator (50A) verschiebt, um dadurch den Werkzeughalter (20) in Z-Richtung relativ zum Werkstückhalter (30) zu verschieben, und
eine Y-Achsen-Verschiebungseinrichtung (40Y), der mindestens einen der folgenden Elemente bewegt: den Werkzeughalter (20) oder die Kombination aus Werkstückhalter (30) und Rotator (50A), um dadurch den Werkzeughalter (20) in Y-Richtungen orthogonal zu den Z-Richtungen und den X-Richtungen relativ zum Werkstückhalter (30) zu bewegen,
wobei das Bearbeitungsprogramm
eine oder mehrere erste ebene Flächen (102R, 102L) bildet, die sich in X-Richtungen und Y-Richtungen auf jeweils einer Seite und einer anderen Seite der Drehwelle (51A) in Y-Richtungen erstrecken, und zwar mittels des Schneidwerkzeugs (6) in einem Zustand, in dem der Werkstückhalter (30) in einem vorbestimmten ersten Winkel um die Drehwelle (51A) gehalten wird, und
zweite ebene Flächen (104R, 104L) bildet, die sich in X-Richtungen und Y-Richtungen erstrecken, an den Unterseiten der ersten ebenen Flächen (102R, 102L) mittels des Schneidwerkzeugs (6) in einem Zustand, in dem der Werkstückhalter (30) in einem zweiten Winkel gehalten wird, der um 180 Grad gegenüber dem ersten Winkel versetzt ist,
im Messschritt die Dicken zwischen den ersten ebenen Flächen (102R, 102L) und den zweiten ebenen Flächen (104R, 104L) in der Z-Richtung gemessen werden,
der Korrekturwert einen Korrekturwert bezüglich eines Drehwinkels des Drehers (50A) um die Drehwelle (51A) umfasst, und
der Korrekturwert bezüglich des Drehwinkels des Rotators (50A) ein Korrekturwert zum Beseitigen einer Differenz zwischen den im Messschritt gemessenen Dicken ist.

3. Korrekturverfahren für die dentale Schneidemaschine (10) nach Anspruch 2, wobei
das Bearbeitungsprogramm eine Kennung (105) zur Identifizierung einer Seite und einer anderen Seite in der Y-Richtung auf dem Korrekturstück (100) durch das Schneidwerkzeug (6) bildet.

4. Korrekturverfahren für die dentale Schneidemaschine (10) nach Anspruch 2 oder 3, wobei
das Bearbeitungsprogramm
mit dem Schneidwerkzeug (6) eine erste Messfläche (111Z) bildet, deren Koordinate in Z-Richtung eine erste Koordinate ist, und zwar in einem Zustand, in dem der Werkstückhalter (30) in einem vorbestimmten Winkel um die Drehwelle (51A) gehalten wird, und
eine zweite Messfläche (112Z) bildet, deren Koordinate in der Z-Richtung eine zweite Koordinate ist, und zwar durch das Schneidwerkzeug (6) in einem Zustand, in dem der Werkstückhalter (30) in einem um 180 Grad gegenüber dem vorgegebenen Winkel versetzten Winkel gehalten wird,
im Messschritt ein Abstand zwischen der ersten Messfläche (111Z) und der zweiten Messfläche (112Z) in der Z-Richtung gemessen wird,
der Korrekturwert einen Korrekturwert bezüglich einer Position des Werkzeughalters (20) in der Z-Richtung relativ zur Drehwelle (51A) umfasst, und
der Korrekturwert bezüglich der Position des Werkzeughalters (20) in der Z-Richtung ein Korrekturwert zum Beseitigen einer Differenz zwischen dem gemessenen Abstand zwischen der ersten Messfläche (111Z) und der zweiten Messfläche (112Z) und dem Abstand zwischen der ersten Messfläche (111Z) und der zweiten Messfläche (112Z) in der Z-Richtung im Bearbeitungsprogramm ist, und nach einer Korrektur hinsichtlich eines Drehwinkels des Rotators (50A) um die Drehwelle (51A) berechnet wird.

5. Korrekturverfahren für die dentale Schneidemaschine (10) nach Anspruch 4, wobei
das Bearbeitungsprogramm die ersten ebenen Flächen (102R, 102L), die zweiten ebenen Flächen (104R, 104L), die erste Messfläche (111Z) und die zweite Messfläche (112Z) auf einer Linie bildet, die durch den Mittelpunkt des Korrekturstücks (100) in X-Richtung verläuft und sich in Y-Richtung erstreckt,
der Bearbeitungsschritt umfasst
einen ersten Bearbeitungsschritt zum Ausbilden der ersten ebenen Flächen (102R, 102L) und der zweiten ebenen Flächen (104R, 104L) an dem Korrekturstück (100) sowie
einen zweiten Bearbeitungsschritt zum Ausbilden der ersten Messfläche (111Z) und der zweiten Messfläche (112Z) an dem Korrekturstück (100),
der Messschritt, der Berechnungsschritt und der Eingabeschritt umfassen
jeweils einen ersten Messschritt, einen ersten Berechnungsschritt und einen ersten Eingabeschritt, die nach dem ersten Bearbeitungsschritt durchgeführt werden, sowie
jeweils einen zweiten Messschritt, einen zweiten Berechnungsschritt und einen zweiten Eingabeschritt, die nach dem zweiten Bearbeitungsschritt durchgeführt werden, und
wobei der Montageschritt umfasst
einen ersten Befestigungsschritt, bei dem das Material (1) für das Korrekturstück (100) vor dem ersten Bearbeitungsschritt an der dentalen Schneidemaschine (10) befestigt wird, und
einen zweiten Befestigungsschritt zum Befestigen des Materials (1) an der dentalen Schneidemaschine (10) unter Änderung einer Drehposition um die Z-Achse gegenüber dem ersten Befestigungsschritt, der nach dem ersten Bearbeitungsschritt, dem ersten Messschritt, dem ersten Berechnungsschritt und dem ersten Eingabeschritt erfolgt.

6. Korrekturverfahren für die dentale Schneidemaschine (10) gemäß einem der Ansprüche 2 bis 5, wobei
das Bearbeitungsprogramm
durch das Schneidwerkzeug (6) auf dem Korrekturstück (100) eine erste Prüffläche (113Y) bildet, die sich in Z-Richtung erstreckt, und zwar in einem Zustand, in dem der Werkstückhalter (30) in einem vorbestimmten Winkel um die Drehachse (51A) gehalten wird und in einer vorbestimmten Position in Y-Richtung fixiert ist, und
mit dem Schneidwerkzeug (6) eine zweite Prüffläche (114Y), die sich in Z-Richtung erstreckt, an dem Korrekturstück (100) bildet, und zwar in einem Zustand, in dem der Werkstückhalter (30) in einem um 180 Grad gegenüber dem vorgegebenen Winkel versetzten Winkel gehalten wird und in der vorgegebenen Position in Y-Richtung gehalten wird,
im Messschritt ein Versatz zwischen der ersten Prüfoberfläche (113Y) und der zweiten Prüfoberfläche (114Y) in der Y-Richtung gemessen wird,
der Korrekturwert einen Korrekturwert bezüglich einer Position des Werkzeughalters (20) in der Y-Richtung relativ zur Drehwelle (51A) umfasst, und
die Korrektur bezüglich der Position des Werkzeughalters (20) in der Y-Richtung ein Korrekturwert zum Beseitigen der gemessenen Verschiebung ist und nach einer Korrektur bezüglich eines Drehwinkels des Rotators (50A) um die Drehwelle (51A) berechnet wird.

7. Eine dentale Schneidemaschine (10), umfassend:
einen Werkzeughalter (20), der ein Schneidwerkzeug (6) hält;
einen Werkstückhalter (30), der ein zu bearbeitendes Objekt (1) hält;
einen Antrieb (40), der konfiguriert ist, zumindest entweder den Werkzeughalter (20) oder den Werkstückhalter (30) zu bewegen, um dadurch das Schneidwerkzeug (6) in einer vorbestimmten Bewegungsrichtung relativ zum Werkstückhalter (30) zu bewegen; und
eine Steuerung (60), die konfiguriert ist, den Antrieb (40) zu steuern, **dadurch gekennzeichnet, dass**
die Steuerung (60) Folgendes umfasst:
ein Programmregister (61), in dem ein Bearbeitungsprogramm eines Korrekturstücks (100) zur Korrektur einer Position des Verstellmechanismus (40) gespeichert ist,
eine Bearbeitungssteuerung (62), die konfiguriert ist, den Antrieb (40) auf der Grundlage des Bearbeitungsprogramms zu steuern und das Korrekturstück (100) zu bearbeiten, um eine erste Ebene (111X), deren Koordinate in Bewegungsrichtung eine erste Koordinate ist, und eine zweite Ebene (112X), deren Koordinate in Bewegungsrichtung eine zweite Koordinate ist, zu bilden,
einen Eingabebereich (63), in den ein Messergebnis eines Abstands in Bewegungsrichtung zwischen der ersten Ebene (111X) und der zweiten Ebene (112X) eingegeben wird,
eine Recheneinheit (64), die konfiguriert ist, auf der Grundlage des in den Eingabebereich (63) eingegebenen Ergebnisses einen Korrekturwert bezüglich des im Antrieb (40) einzustellenden Abstands zu berechnen, und
eine Korrektureinrichtung (65), die konfiguriert ist, den in der Recheneinheit (64) berechneten Korrekturwert im Antrieb (40) einzustellen.

## Revendications

1. Procédé de correction destiné à une machine de coupe dentaire (10) comprenant :
une étape de programme consistant à entrer un programme d'usinage d'une pièce de correction (100) dans une machine de coupe dentaire (10) ;
une étape de montage consistant à monter un matériau (1) destiné à la pièce de correction (100) dans la machine de coupe dentaire (10) dans laquelle le programme d'usinage a été entré ;
une étape d'usinage consistant à usiner la pièce de correction (100) à partir du matériau (1) à l'aide de la machine de coupe dentaire (10) sur la base du programme d'usinage ;
une étape de mesurage consistant à mesurer une dimension d'une partie prédéfinie de la pièce de correction (100) usinée lors de l'étape d'usinage ;
une étape de calcul consistant à calculer une valeur de correction sur la base de la dimension mesurée lors de l'étape de mesurage ; et
une étape d'entrée consistant à entrer la valeur de correction calculée lors de l'étape de calcul dans la machine de coupe dentaire (10), dans lequel
la machine de coupe dentaire (10) comporte
un porte-outil (20) qui porte un outil de coupe (6),
un porte-pièce (30) qui porte la pièce de correction (100), et
un dispositif de déplacement (40) qui déplace l'un au moins parmi le porte-outil (20) et le porte-pièce (30) pour ainsi déplacer l'outil de coupe (6) dans une direction de déplacement prédéfinie par rapport au porte-pièce (30),
**caractérisé en ce que**
le programme d'usinage forme un premier plan (111X) dont la coordonnée dans la direction de déplacement est une première coordonnée et un second plan (112X) dont la coordonnée dans la direction de déplacement est une seconde coordonnée à l'aide de l'outil de coupe (6) sur la pièce de correction (100),
lors de l'étape de mesurage, une distance entre le premier plan (111X) et le second plan (112X) dans la direction de déplacement est mesurée,
la valeur de correction comporte une valeur de correction concernant la distance dans la direction de déplacement, et
la valeur de correction concernant la distance dans la direction de déplacement est une valeur de correction permettant de régler une différence de valeur de coordonnée entre la première coordonnée et la seconde coordonnée sur la distance mesurée à l'étape de mesurage.

2. Procédé de correction destiné à la machine de coupe dentaire (10) selon la revendication 1, dans lequel
la machine de coupe dentaire (10) comporte
un porte-outil (20) qui porte un outil de coupe (6) en forme de barreau s'étendant dans des directions prédéfinies d'axe Z,
un porte-pièce (30) qui porte le matériau (1) destiné à la pièce de correction (100),
un rotateur (50A) qui met le porte-pièce (30) en rotation autour d'un arbre de rotation (51A) s'étendant dans des directions d'axe X orthogonales aux directions d'axe Z pour ainsi changer l'orientation du porte-pièce (30) par rapport à l'outil de coupe (6),
un dispositif de déplacement d'axe Z (40Z) qui déplace l'un au moins parmi le porte-outil (20) et un ensemble formé par le porte-pièce (30) et le rotateur (50A) pour ainsi déplacer le porte-outil (20) dans les directions d'axe Z par rapport au porte-pièce (30), et
un dispositif de déplacement d'axe Y (40Y) qui déplace l'un au moins parmi le porte-outil (20) et l'ensemble formé par le porte-pièce (30) et le rotateur (50A) pour ainsi déplacer le porte-outil (20) dans des directions d'axe Y orthogonales aux directions d'axe Z et aux directions d'axe X par rapport au porte-pièce (30),
le programme d'usinage forme une ou plusieurs premières surfaces planes (102R, 102L) s'étendant dans les directions d'axe X et les directions d'axe Y sur chacun d'un côté et d'un autre côté de l'arbre de rotation (51A) dans les directions d'axe Y à l'aide de l'outil de coupe (6) dans un état dans lequel le porte-pièce (30) est maintenu à un premier angle prédéfini autour de l'arbre de rotation (51A), et
forme des secondes surfaces planes (104R, 104L) s'étendant dans les directions d'axe X et les directions d'axe Y sur des côtés inférieurs des premières surfaces planes (102R, 102L) à l'aide de l'outil de coupe (6) dans un état dans lequel le porte-pièce (30) est maintenu à un second angle décalé de 180 degrés par rapport au premier angle,
lors de l'étape de mesurage, des épaisseurs entre les premières surfaces planes (102R, 102L) et les secondes surfaces planes (104R, 104L) dans les directions d'axe Z sont mesurées,
la valeur de correction comporte une valeur de correction concernant un angle de rotation du rotateur (50A) autour de l'arbre de rotation (51A), et
la valeur de correction concernant l'angle de rotation du rotateur (50A) est une valeur de correction permettant d'éliminer une différence entre les épaisseurs mesurées lors de l'étape de mesurage.

3. Procédé de correction destiné à la machine de coupe dentaire (10) selon la revendication 2, dans lequel
le programme d'usinage forme un identificateur (105) permettant d'identifier un côté et un autre côté dans les directions d'axe Y, sur la pièce de correction (100) à l'aide de l'outil de coupe (6).

4. Procédé de correction destiné à la machine de coupe dentaire (10) selon la revendication 2 ou 3, dans lequel
le programme d'usinage
forme une première surface de mesurage (111Z) dont la coordonnée dans les directions d'axe Z est une première coordonnée à l'aide de l'outil de coupe (6) dans un état dans lequel le porte-pièce (30) est maintenu à un angle prédéfini autour de l'arbre de rotation (51A), et
forme une seconde surface de mesurage (112Z) dont la coordonnée dans les directions d'axe Z est une seconde coordonnée à l'aide de l'outil de coupe (6) dans un état dans lequel le porte-pièce (30) est maintenu à un angle décalé de 180 degrés par rapport à l'angle prédéfini,
lors de l'étape de mesurage, une distance entre la première surface de mesurage (111Z) et la seconde surface de mesurage (112Z) dans les directions d'axe Z est mesurée,
la valeur de correction comporte une valeur de correction concernant une position du porte-outil (20) dans les directions d'axe Z par rapport à l'arbre de rotation (51A), et
la valeur de correction concernant la position du porte-outil (20) dans les directions d'axe Z est une valeur de correction permettant d'éliminer une différence entre la distance mesurée entre la première surface de mesurage (111Z) et la seconde surface de mesurage (112Z) et la distance entre la première surface de mesurage (111Z) et la seconde distance de mesurage (112Z) dans les directions d'axe Z dans le programme d'usinage, et elle est calculée après correction concernant un angle de rotation du rotateur (50A) autour de l'arbre de rotation (51A).

5. Procédé de correction destiné à la machine de coupe dentaire (10) selon la revendication 4, dans lequel
le programme d'usinage forme les premières surfaces planes (102R, 102L), les secondes surfaces planes (104R, 104L), la première surface de mesurage (111Z) et la seconde surface de mesurage (112Z) sur une ligne passant à travers un centre de la pièce de correction (100) dans les directions d'axe X et s'étendant dans les directions d'axe Y,
l'étape d'usinage comporte
une première étape d'usinage consistant à former les premières surfaces planes (102R, 102L) et les secondes surfaces planes (104R, 104L) sur la pièce de correction (100), et
une seconde étape d'usinage consistant à former la première surface de mesurage (111Z) et la seconde surface de mesurage (112Z) sur la pièce de correction (100),
l'étape de mesurage, l'étape de calcul et l'étape d'entrée comportent
une première étape de mesurage, une première étape de calcul et une première étape d'entrée, respectivement, effectuées après la première étape d'usinage, et
une seconde étape de mesurage, une seconde étape de calcul et une seconde étape d'entrée, respectivement, effectuées après la seconde étape d'usinage, et
l'étape de montage comporte
une première étape de montage consistant à monter le matériau (1) destiné à la pièce de correction (100) dans la machine de coupe dentaire (10) avant la première étape d'usinage, et
une seconde étape de montage consistant à monter le matériau (1) dans la machine de coupe dentaire (10) tout en changeant une position de rotation autour de l'axe Z issue de la première étape de montage, après la première étape d'usinage, la première étape de mesurage, la première étape de calcul et la première étape d'entrée.

6. Procédé de correction destiné à la machine de coupe dentaire (10) selon l'une quelconque des revendications 2 à 5, dans lequel
le programme d'usinage
forme une première surface d'inspection (113Y) s'étendant dans les directions d'axe Z à l'aide de l'outil de coupe (6) sur la pièce de correction (100) dans un état dans lequel le porte-pièce (30) est maintenu à un angle prédéfini autour de l'arbre de rotation (51A) et est maintenu à une position prédéfinie dans les directions d'axe Y, et
forme une seconde surface d'inspection (114Y) s'étendant dans les directions d'axe Z à l'aide de l'outil de coupe (6) sur la pièce de correction (100) dans un état dans lequel le porte-pièce (30) est maintenu à un angle décalé de 180 degrés par rapport à l'angle prédéfini et est maintenu à la position prédéfinie dans les directions d'axe Y,
lors de l'étape de mesurage, une ampleur du décalage entre la première surface d'inspection (113Y) et la seconde surface d'inspection (114Y) concernant les directions d'axe Y est mesurée,
la valeur de correction comporte une valeur de correction concernant une position du porte-outil (20) dans les directions d'axe Y par rapport à l'arbre de rotation (51A), et
la correction concernant la position du porte-outil (20) dans les directions d'axe Y est une valeur de correction permettant d'éliminer le décalage mesuré, et elle est calculée après correction concernant un angle de rotation du rotateur (50A) autour de l'arbre de rotation (51A).

7. Machine de coupe dentaire (10) comprenant :
un porte-outil (20) qui porte un outil de coupe (6) ;
un porte-pièce (30) qui porte un objet usiné (1) ;
un dispositif de déplacement (40) conçu pour déplacer l'un au moins parmi le porte-outil (20) et le porte-pièce (30) pour ainsi déplacer l'outil de coupe (6) dans une direction de déplacement prédéfinie par rapport au porte-pièce (30) ; et
un module de commande (60) configuré pour commander le dispositif de déplacement (40),
**caractérisée en ce que**,
le module de commande (60) comporte
un registre de programme (61) dans lequel un programme d'usinage d'une pièce de correction (100) permettant de corriger une position du dispositif de déplacement (40) est enregistré,
un module de commande d'usinage (62) configuré pour commander le dispositif de déplacement (40) sur la base du programme d'usinage et d'usiner la pièce de correction (100) afin de former un premier plan (111X) dont la coordonnée dans la direction de déplacement est une première coordonnée et un second plan (112X) dont la coordonnée dans la direction de déplacement est une seconde coordonnée,
une section d'entrée (63) dans laquelle est entré un résultat de mesurage d'une distance dans la direction de déplacement entre le premier plan (111X) et le second plan (112X),
un calculateur (64) configuré pour calculer une valeur de correction concernant la distance à définir dans le dispositif de déplacement (40) sur la base du résultat entré dans la section d'entrée (63), et
un correcteur (65) qui est configuré pour régler la valeur de correction calculée dans le calculateur (64) dans le dispositif de déplacement (40).
